# EUROPEAN PATENT SPECIFICATION

(11) **EP 2 546 074 B1**
(45) Date of publication and mention of the grant of the patent: **16.12.2015**
(21) Application number: 11783417.6
(22) Date of filing: 10.05.2011
(51) Int. Cl.: B60C 1/00, B60C 5/00, B60C 17/00, B60C 23/18, B60C 9/14, B60C 13/02

(54) **VEHICLE**
FAHRZEUG
VÉHICULE

(30) Priority: 18.05.2010 JP 2010114522
(43) Date of publication of application: 16.01.2013
(73) Proprietor: Sumitomo Rubber Industries, Ltd., Kobe-shi, Hyogo 651-0072 (JP)
(72) Inventor: HINO Hidehiko, Kobe-shi Hyogo 651-0072 (JP); HANYA Masahiro, Kobe-shi Hyogo 651-0072 (JP)
(74) Representative: Manitz, Finsterwald & Partner GbR
(86) International application number: PCT/JP2011/060763
(87) International publication number: WO 2011/145480

(56) References cited:
- DE-A1-102006 011 919
- DE-A1-102007 049 873
- JP-A- 5 008 620
- JP-A- 7 290 916
- JP-A- 2004 330 822
- JP-A- 2004 359 096
- JP-A- 2004 359 097
- JP-A- 2006 142 990
- JP-A- 2006 182 318
- JP-A- 2007 182 095
- JP-A- 2008 273 288

## Description

### Technical Field

The present invention relates to a vehicle having an improved run flat durability without an excessive increase of a longitudinal spring constant of a run flat tire.

### Background of the Invention

In a tire, distortion periodically occurs in a rubber portion while the tire rolling. A part of the distortion energy is transformed into heat, and the heat is generated. Especially when a vehicle runs with reduced air pressure, respective the distortions of various portions increases, and the heat generation also increases. If a rubber temperature of the tire exceeds a certain value, destruction of the rubber starts. Therefore, in order to enhance the durability of the tire, it is effective to lower the temperature of the tire while running.

In recent years, run flat tires are popular because they are useful for enhancing convenience and safety and to widening a vehicle interior space. As such a run flat tire, a side-reinforced run flat tire is well known that includes a side-reinforcing rubber layer having a substantially crescentic cross section inside of each of sidewall (see the following Patent Document JP-A-2006182318). According to the run flat tire, even if the tire is punctured, the side-reinforcing rubber layer supports a tire load instead of the air pressure, and accordingly deflection of the sidewall is limited. This retards the heat generation of the tire. Therefore, even if the run flat tire is punctured, it is possible to run continuously about 50 to 100 km at a speed of 60 to 80 km/h (this running may be referred to also as "run flat running" hereafter).

However, at the time of run flat running where an ai r pressure is reduced, even the run flat tire generates the heat in the side-reinforcing rubber layer substantially in proportion to a runni ng di stance. And if the runni ng distance exceeds a limit, the side-reinforcing rubber layer is destroyed due to heat generation.

DE 10 2007 049873 A1 discloses a runflat tire, which comprises a carcass that extends from the tread portion through a sidewall portion to a bead core of a bead portion and a side reinforcing rubber layer with a crescent cross-sectional shape being disposed at the inside of the carcass.

A tire having a heat conductive rubber is disclosed in JP-A-2007 182 095.

DE 10 2006 011919 A1 relates to a vehicle, which comprises a system for controlling the temperature of the ti re tread by blasting air onto the tires.

### Summary of Invention

### Problem to be solved by the Invention

To retard such a destruction of the tire caused by heat generation, it is effective to enhance rigidities of respective portions of the tire and to reduce the distortion. However, the tire reinforced by such a method has a drawback that a vertical spring excessively increases, the riding comfort is deteriorated and the tire weight is increased.

The present invention was accomplished in view of such circumstances. It is a main object of the invention to provide a vehicle having an improved run flat durability without an excessive increase of a longitudinal spring constant of the run flat tire. The present invention is based on providing on a ti re cavity surface of the run flat tire wi th a heat-conducti ng member having coefficient of thermal conductivity of not less than 0.3 W/(m·K), wherein the heat-conducting member extends from said side reinforcing rubber layer projection region at least to the bead bottom of said bead portion so as to contact the rim part of the wheel rim directly when the ti re is mounted on the wheel rim, and the vehicle comprises a cool i ng devi ce for blasting fluid to cool the run flat tire directly and/or through a rim from the outside.

### Means of solving the Problems

In the present invention, a vehicle with a run flat tire comprises a carcass extending from a tread portion through a sidewall portion to a bead core of a bead portion, and a side reinforcing rubber layer having a substantially crescent cross-sectional shape and disposed in an inside of the carcass of the sidewall portion. The run flat tire is provided on a tire cavity surface with a heat-conducting member having coefficient of thermal conductivity of not less than 0.3 W/(m·K), and is provided in a wheel rim with said run flat tire and/or said run flat tire with a cooling device to cool said run flat tire by blasting fluid.

The vehicle of the present invention is provided on the ti re cavity surface of the run flat tire with a heat-conducting member having a coefficient of thermal conducti vi ty of not less than 0.3 W/(m·K). Such a heat-conducti ng member can absorb the heat generated from a ti re member while run fl at running and can discharge the heat into the tire cavity.

The vehicle of the present invention comprises the cooling device to cool the run flat tire by blasting a fluid directly and/or through the rim from the outside. Such a cooling device improves an efficient heat dissipation of the heat of the tire inside to the outside. Therefore, in the present invention, the heat generation can laten without excessive increase of the longitudinal spring constant of the run flat tire, and the run flat durability can be improved.

At least part of the heat-conducting member is preferably disposed in a side rei nforci ng rubber layer projection region where the side rei nforci ng rubber layer is projected on the tire cavity surface.

According to the present invention, the heat-conducting member extends from the side reinforcing rubber layer projection region at least to the bead bottom of the bead portion.

The heat-conducting member preferably extends through a bead bottom to an axial outer surface of the bead portion.

The heat-conducting member is preferably disposed entirely in the tire cavity surface.

The heat-conducting member is preferably a heat-conducting rubber.

The heat-conducting rubber comprises preferably base rubber including diene rubber and a coal pitch-based carbon fiber.

A content percentage of natural rubber and/or isoprene rubber with respect to the diene rubber of 100 percent by mass in the heat-conducting rubber are preferably in a range of from 20 to 80 percent by mass.

Mixing amount of the coal pitch-based carbon fiber in the base rubber of 100 parts by mass with respect to the heat-conducti ng rubber is preferably in a range of from 1 to 50 parts by mass.

The maximum thickness of the heat-conducting rubber is preferably in a range of from 0.3 to 3.0 mm.

The heat-conducting member is preferably a metallic sheet.

The thickness of the metallic sheet is preferably in a range of from 0.02 to 0.2 mm.

The cooling device preferably blasts the fluid when an air pressure of the run flat tire drops to below a predetermined value.

The fluid may be a gas.

The cooling device may comprise a duct including one end and the other end. The one end is an air intake port to intake the air, and the other end is an outlet to blow said air toward said run flat tire.

The cooling device additionally may comprise a changeover device to blast at least part of fluid flowing in said duct toward said run flat tire when the air pressure of the run flat tire decreases, and a control device to control this changeover device.

The fluid may be a liquid. In this case, the cooling device comprises a tank storing said liquid, a pump to pump the liquid from the tank, a flow passage having one end being connected with the pump and the other end communicating with a discharge port facing to the pneumatic tire, and a control device to control said pump.

### Brief Description of Drawings

Fig. 1 is a schematic plan view showing an embodiment of a vehicle according to a first aspect of the present invention.
Fig. 2 is an enlarged view of an essential portion of a front right wheel and its periphery.
Fig. 3 is a cross sectional view taken along the line A-A in Fig. 2.
Fig. 4 is a cross-sectional view of the run flat tire in the present embodiment.
Fig. 5 is an enlarged cross-sectional view showing the sidewall portion and the like of Fig. 4.
Fig. 6 is a cross-sectional view showing another embodiment of the run flat tire.
Fig. 7 is a cross-sectional view of the run flat tire while run flat running.
Fig. 8 is a cross-sectional view showing another embodiment of the run flat tire.
Fig. 9(a) is a cross-sectional view of the run flat tire comprising dimples; and Fig. 9(b) is a partial side view of Fig. 9(a).
Fig. 10 is a cross-sectional view showing another embodiment of the run flat tire of the present invention.
Fig. 11 is a perspective view showing a metallic sheet.
Fig. 12 is a perspective view of the run flat tire comprising the metallic sheet viewed from a tire cavity side.
Fig. 13 is a partial cross sectional view of the run flat ti re comprising the metallic sheet with a slack.
Fig. 14 is a cross-sectional view showing another embodiment of the run flat tire.
Fig. 15(a) is a cross-sectional view showing an state that gas was blown toward the run flat tire of Fig. 6; and Fig. 15(b) is a cross-sectional view showing a state that the gas was blown toward the run flat tire of Fig. 9.
Fig. 16 is a partly enlarged view of a vicinity of a right-front wheel showing another embodiment of the present invention.
Fig. 17 is a planar pattern diagram of the vehicle comprising a cooling device of another embodiment of the present invention.

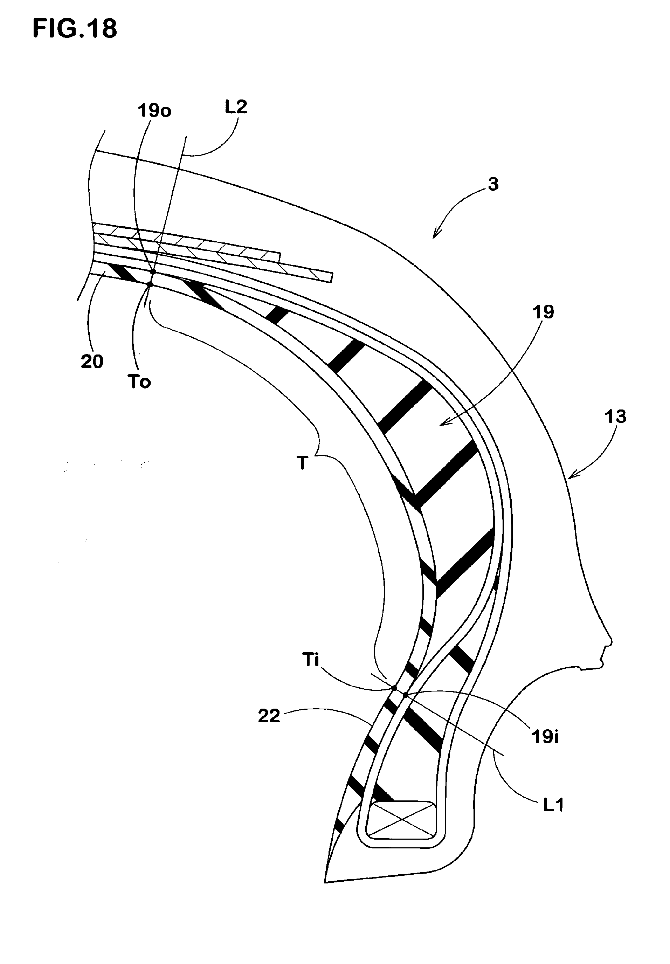

Fig. 18 is a cross-sectional view of the run flat tire not to be provided with a heat-conducting rubber member.

### Reference signs List

- 1: vehicle
- 3: Run flat tire
- 4: wheel rim
- 8: Cooling device
- 12: Tread portion
- 13: Sidewall portion
- 14: Bead portion
- 15: Bead core
- 16: Carcass
- 19: Side reinforcing rubber layer
- 21: Heat-conducting member
- 22: Tire cavity surface
- G: Fluid

### Description of Embodiments

An embodiment of the present invention will be described on the basis of the drawings.

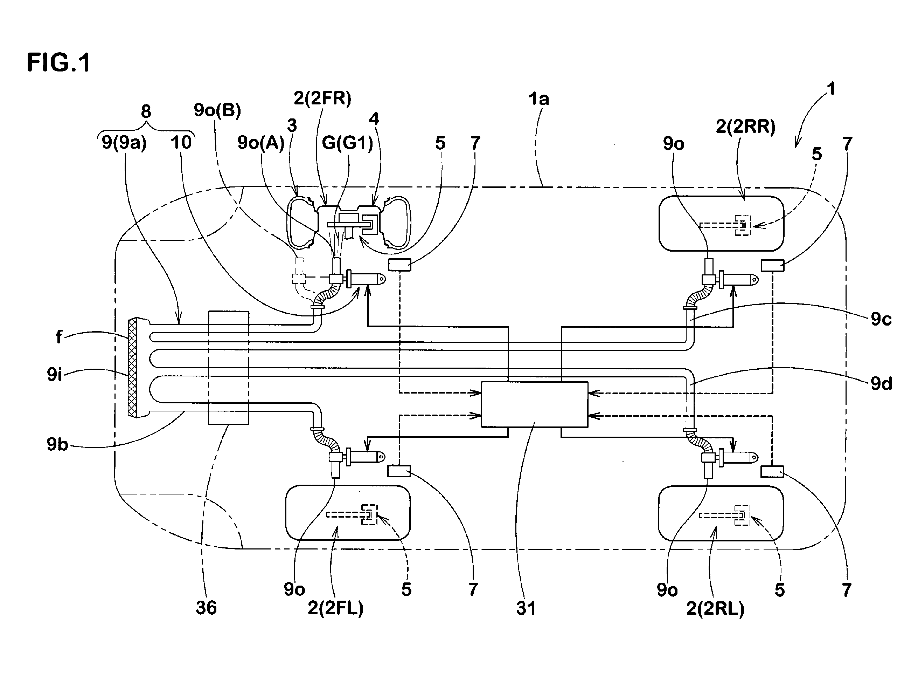

Fig. 1 is a schematic plan of a vehicle 1 according to a first aspect of the present invention. The vehicle 1 is a four-wheeled passenger vehicle, and four wheels 2 are mounted on a vehicle body 1a. The four wheels 2 are a right-front wheel 2FR, a left-front wheel 2FL, a right-rear wheel 2RR, and a left-rear wheel 2RL.

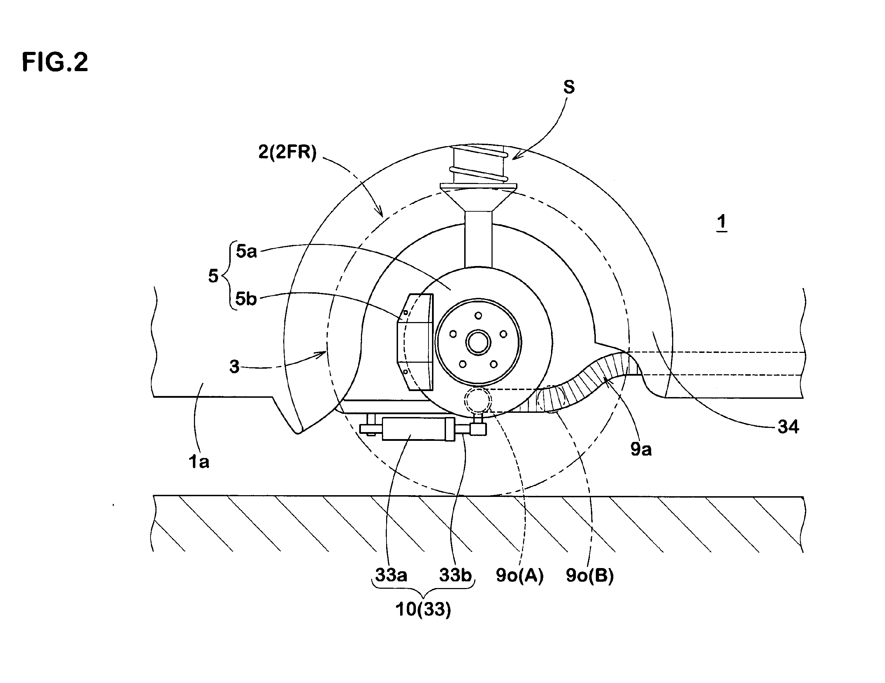

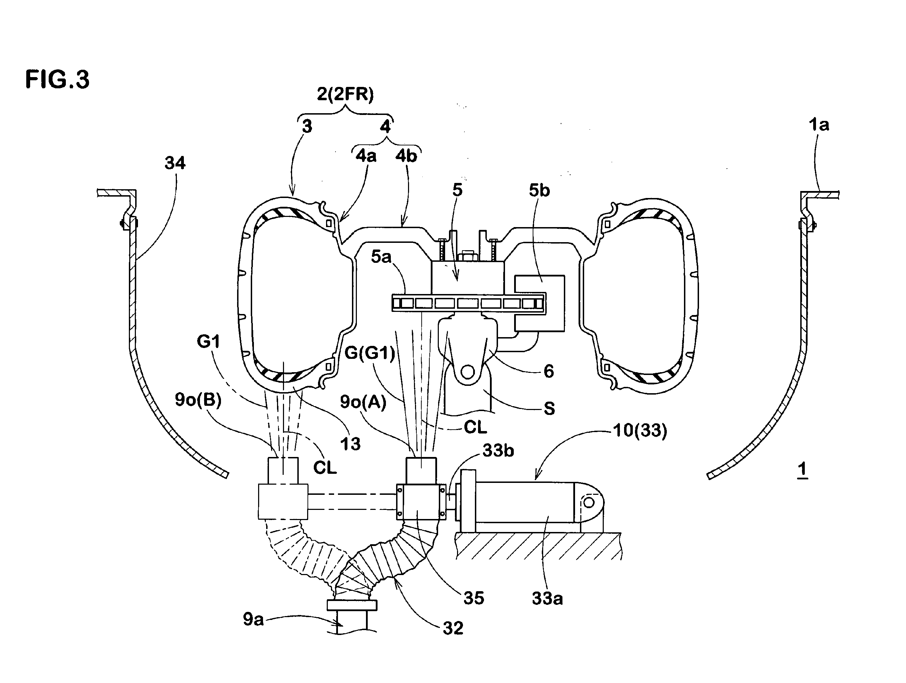

Fig. 2 is a side view of the front right wheel 2FR as a representative tire, and Fig. 3 is an A-A cross-sectional view thereof. Each wheel 2 includes a run flat tire 3 and a wheel rim 4 around which the run flat tire 3 is assembled.

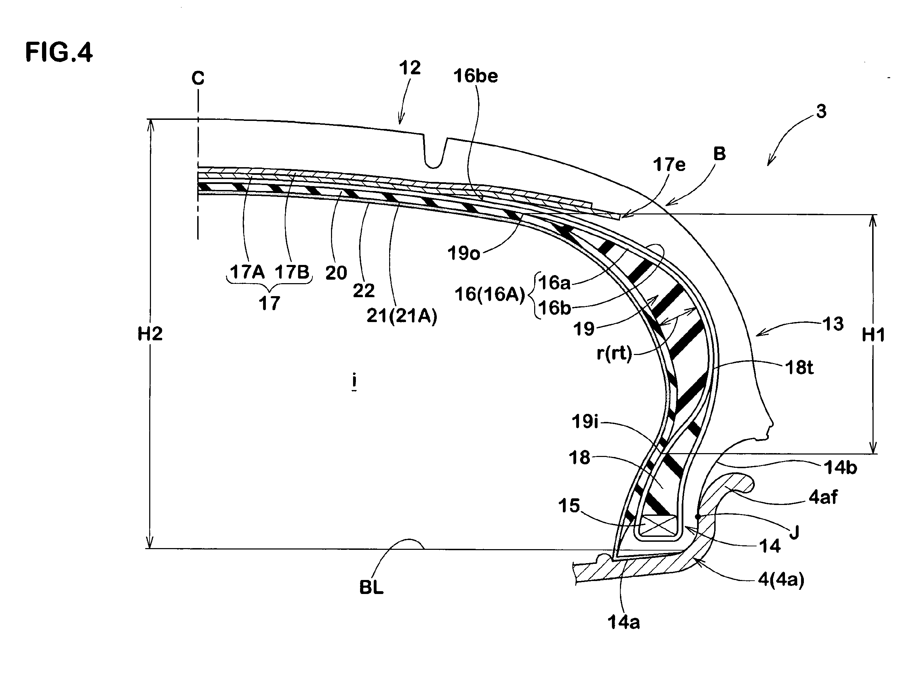

As shown in Fig. 4 in a close-up manner, the run flat tire 3 comprises a carcass 16 extending from a tread portion 12 through a sidewall portion 13 to a bead core 15 of a bead portion 14, a belt layer 17 disposed radially on the outside of the tire radial direction of this carcass 16 and on the inside of the tread portion 12, and a side reinforcing rubber layer 19 having a substantially crescent cross-sectional shape and disposed on the inside of the carcass 16 of the sidewall portion 13. The run flat ti re 3 is provided on the inside of the side reinforcing rubber layer 19 with an inner liner rubber 20.

The carcass 16 is formed by layering not less than one carcass ply, a carcass ply 16A in the present example, made of a carcass cord having a radial stricture and arranged at an angle of 80 to 90 degrees with respect to the tire equator C, for example. The carcass cords are made of organic fiber cords such as polyester, nylon, rayon, aramid, and steel cords as needed.

The carcass ply 16A comprises a main part 16a extending from the tread portion 12 through the sidewall portion 13 to the bead core 15 of the bead portion 14, and a turn-up 16b connecting with this main part 16a and turned up around the bead core 15 from the axially inside to the axially outside of the tire. A bead apex rubber 18 is disposed between the main part 16a and the turn-up 16b of the carcass ply 16A. The bead apex rubber 18 extends from the bead core 15 outwardly in the radial direction of the tire and is made of hard rubber so as to reinforce arbitrarily the bead portion 14.

In the present embodiment, the turn-up 16b of the carcass 16 extends over the outer end of the bead apex rubber outwardly in the radial direction. The outer end 16be of the turn-up 16b terminates between the main part 16a and the belt layer 17. This carcass ply 16A efficiently reinforces the sidewall portion 13 and reduces damages occurred from the outer end 16be.

The belt layer 17 is formed by layering at least two belt plies, a radially inner belt ply 17A and a radially outer belt ply 17B in the present embodiment, made of cords arranged at a small angle of 10 to 35 degrees with respect to with respect to the tire equator C, for example. The belt cord of the present embodiment is made of steel cord, but may be made of highly elastic organic fiber cord such as aramid, rayon and the like, as needed.

The above-mentioned side reinforcing rubber layer 19 is disposed continuously in the tire circumferential direction on the axially inside of the carcass 16 and on the axially outside of the inner liner rubber 20. The side reinforcing rubber layer 19 is substantially crescent-shaped in cross section. The thickness (r) of the side reinforcing rubber layer 19, which is measured in the direction of the normal line with respect to the carcass ply 16A, tapers from a central region toward a radially inner end 19i and a radially outer end 19o.

The inner end 19i of the side reinforcing rubber layer 19 is disposed on the radially inside of the outer end 18t of the bead apex rubber 18 and on the radially outside of the bead core 15, for example. The outer end 19o of the side reinforcing rubber layer 19 is on the axially inside of the outer end 17e of the belt layer 17, for example. With this arrangement, bending rigidity between the sidewall portion 13 and the bead portion 14 can be improved in a good balance, and rigidity of a buttress portion B and the like can be effectively increased.

In the side reinforcing rubber layer 19 of a passenger car, for example, a radial length H1 between the inner end 19i and the outer end 19o is preferably set to be about 35 to 70% of a tire cross-section height H2 measured from a bead base line BL. The maximum thickness (rt) of the side reinforcing rubber layer 19 is preferably about 5 to 20 mm, for example. A rubber hardness of the side reinforcing rubber layer 19 is preferably about 60 to 95 deg., for example. Those structures of the run flat tire 3 highly achi eve a good balance between ri de comfort and sidewall reinforce efficacy.

In this description, unless otherwise noted, each dimension of portions of the tire including the above-mentioned dimensions is measured under regular state of the tire mounted on a regular rim inflated to a regular pressure and loaded with no load.

The "regular rim" is a rim determined for each tire by a standard including one on which the tire is based. For example, it is a standard rim in the case of JATMA, a "Design Rim" in the case of TRA, and a "Measuring Rim" in the case of ETRTO.

The "regular internal pressure" means an air pressure determined for each tire by the standard. For example, it is the maximum air pressure in JATMA, the maximum value described in a table "TIRE LOAD LIMITS AT VARIOUS COLD INFLATION PRESSURES" in the case of TRA, and the "INFLATION PRESSURE" in the case of ETRTO.

In the present specification, the rubber hardness, which is found in accordance with the JIS-K6253, is a hardness of durometer-Type A under a condition of 23 deg. C.

The inner liner rubber 20 substantially strides over the bead portions 14 and 14 so as to keep the air in the tire cavity (i). For the inner liner rubber 20, used is a rubber composition having a gas barrier property such as butyl rubber, halogenated butyl rubber, and the like.

The run flat tire 1 of the present embodiment is provided in the tire cavity surface 22 with a heat-conducting member 21 having a coefficient of thermal conductivity of not less than 0.3 W/(m·K). The heat-conducti ng member 21 of the present embodiment is made of a heat-conducting rubber 21A having the above-mentioned coefficient of thermal conductivity.

In the present specification, the coefficient of thermal conductivity of the heat-conducting rubber 21A is measured with a measuring instrument (measuring device "QTM-D3" manufactured by Kyoto Electronics Manufacturing Co, Ltd., for example) under the following condition:
Measurement temperature: 25 deg. C
Measurement time: 60 seconds
Test piece: A test piece made of the same rubber composition as the heat-conducting rubber.
Test piece shape: A plate of 100 mm long, 50 mm wide, and 10 mm thick.
Test piece surface: Smooth.

Such a high heat-conducti ng rubber 21A having a coefficient of thermal conductivity is disposed in the tire cavity surface 22 so that the heat of each part of the tire member generated while run flat running moves promptly to the tire cavity surface 22 and is released into the tire cavity (i), for example. Therefore, in the run flat tire 3, the heat generation from the tire member while run flat running becomes suppressed, and the destruction by the heat becomes suppressed. Therefore, the run flat durability improves.

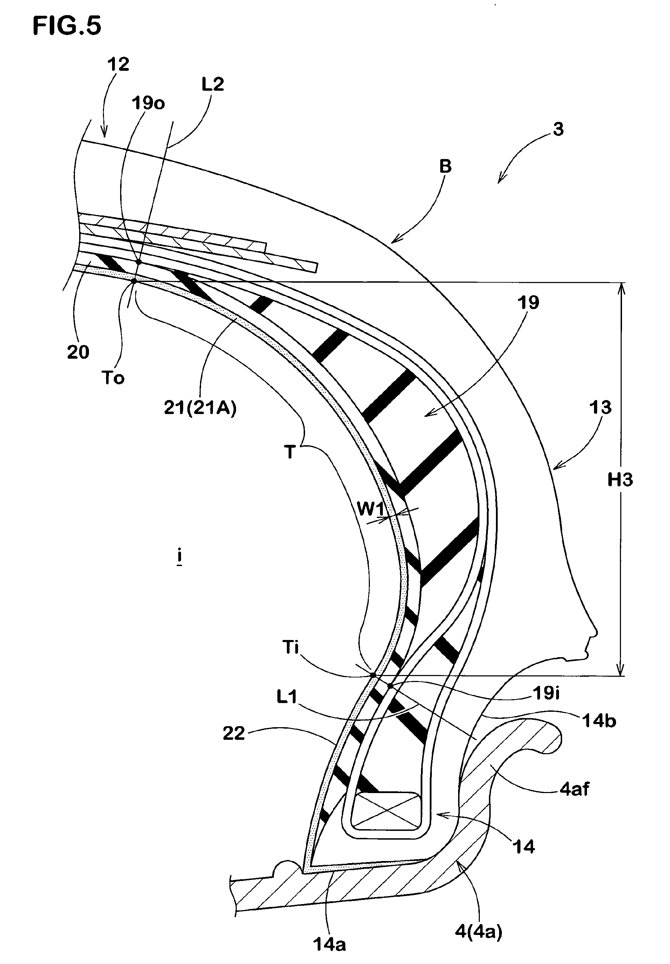

To exhibit effectively such a behavior, as shown in Fig. 5, at least a part of the heat-conducting rubber 21A is preferably disposed in a region T (hereinafter referred to as "side-reinforcing-rubber-layer projection-region T"), which is determined by projecting the side reinforcing rubber layer 19 on the tire cavity surface 22. The side-reinforcing-rubber-layer projection-region T is an area between an inner end Ti and an outer end To. The inner end Ti and the outer end To are the intersection points of the normal lines L1 and L2 extending from the inner end 19i and the outer end 19o of the side reinforcing rubber layer 19 to the tire cavity surface 22 with the tire cavity surface 22. with this arrangement, the heat-conducting rubber 21A suppresses effectively the heat generation of the side reinforcing rubber layer 19 and improves greatly the run flat durability.

The heat-conducti ng rubber 21A is more preferably disposed in the enti re area of the tire cavity surface 22 including the side-reinforcing-rubber-layer projection-region T. This arrangement of the heat-conducting rubber 21A improves the heat release efficacy of the entire area of the tire cavity surface 22 including not only the side reinforcing rubber layer 19 but also the tread portion 12 and the buttress portion B and the like and improves better the run flat durability.

The heat-conducting rubber 21A can be easily made by cross-linking a rubber composition comprising a base rubber and a thermally-conductive material spreading in the base rubber, for example.

The base rubber of the heat-conducting rubber 21A preferably includes diene rubber from viewpoints of crack resistance and processability. A ratio of an amount of diene-based rubber occupied in the entire amount of the base rubber is preferably not less than 40 percent by mass, more preferably not less than 50 percent by mass, much more preferably not less than 60 percent by mass.

Examples of the diene rubber are natural rubber (NR), epoxidized natural rubber (ENR), butadiene rubber (BR), styrene-butadiene copolymer (SBR), isoprene rubber (IR), butyl rubber, isobutylene-isoprene copolymer (IIR), acrylonitrile-butadiene copolymer (NBR), polychloroprene (CR), styrene-isoprene-butadiene copolymer (SIBR), styrene-isoprene copolymer and isoprene-butadiene copolymer, for example. One of them or two or more of them may be used together. Especially, NR, IR, BR, and SBR are favorable, which have low heat-generation property. Especially, the diene rubber preferably comprises at least NR and/or IR. Moreover, modified BR is desirable for BR, and modified SBR is desirable for SBR.

An example of the modified SBR is SBR modified by a compound expressed by the following formula (1).

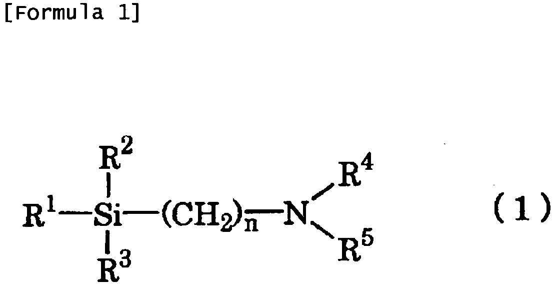

In this formula, R¹, R², and R³ are the same or differ each other, and mean an alkyl group, alkoxy group, silyloxy group, acetal group, carboxyl group, mercapto group, or derivatives of them. R⁴ and R⁵ are the same or differ each other, and mean a hydrogenic atom or alkyl group. "n" means an integral number. An example of a commercialized product of the modified SBR modified by Formula (1) is E15 and the like manufactured by Asahi Kasei Chemicals Corporation.

Moreover, an example of the modified BR is also modified by the above-mentioned Formula (1), for example. An example of commercialized product is a modified butadiene rubber (vinyl content: 15 percent by mass; R¹, R², and R³ = -OCH₃; R⁴ and R⁵ = -CH₂CH₃; n = 3) manufactured by Sumitomo Chemical Company, Limited.

A vinyl content of the modified butadiene rubber is preferably not more than 35 percent by mass, more preferably mass not more than 25 percent by mass, much more preferably not more than 20 percent by mass. When the vinyl content is over 35 percent by mass, the low heat-generation performance is apt to be deteriorated. The lower limit of the vinyl content is not restricted in particular. Also, vinyl content (1,2-bonded butadiene unit amount))) is measured by an infrared absorption spectrum analysis method.

NR is not particularly restricted but a general NR in a tire industry such as SIR20, RSS#3, TSR20 and the like can be used. Also, a general IR can be used. BR is not particularly restricted, but high cis BR, BR containing syndiotactic polybutadiene crystal and the like can be used, for example. SBR obtained by asolution polymerization method and an emulsion polymerization method but is not particularly limited.

when the diene rubber contains BR, a content of BR in the diene rubber in 100 percent by mass is preferably not less than 10 percent by mass, more preferably not less than 20 percent by mass, much more preferably not less than 30 percent by mass. When the content of BR is less than 10 percent by mass, low heat generation property is tend to have lesser effectiveness. The content of BR is preferably not more than 80 percent by mass, more preferably not more than 60 percent by mass, much more preferably not more than 50 percent by mass. When the content of BR is over 80 percent by mass, rubber hardness is tend to not be obtained enough.

when the diene rubber contains SBR, a content of SBR in 100 percent by mass of the diene rubber is preferably not less than 10 percent by mass, more preferably not less than 20 percent by mass, much more preferably not less than 30 percent by mass. When the content of SBR is less than 10 percent by mass, the low heat generation property of the rubber is insufficient, an elongation of the rubber (EB) becomes scarce, and a sufficient heat resistance cannot be tend to be obtained. The content of SBR may be 100 percent by mass, but the rubber falls off because of lack of adhesion in a manufacturing process, and the elongation of the rubber enormously deteriorates. Therefore, the content of SBR is preferably not more than 80 percent by mass, more preferably not more than 70 percent by mass, much more preferably not more than 60 percent by mass.

when the diene rubber contains NR and/or IR, a ratio of amount of NR and/or IR in 100 percent by mass of the diene rubber can be set arbitrarily. When it is too small, the rubber hardness tends to become insufficient. When it is too large, the heat resistance and the rubber hardness does not tend to obtain sufficiently. From such a standpoint of view, the radio of the amount of NR and/or IR in 100 percent by mass of the diene rubber is preferably not less than 20 percent by mass, more preferably not less than 25 percent by mass, much more preferably not less than 30 percent by mass; and it is preferably not more than 80 percent by mass, more preferably not more than 75 percent by mass, much more preferably not more than 70 percent by mass. The "amount of NR and/or IR" means the total amount of both components.

Examples of the thermal conductive materials are metal powder, metal oxide powder (e.g., perfect spherical alumina), metal fiber, and carbon fiber. Thermal conductivity of alone thermal conductive material is preferably not less than 100 W/(m·K), and more preferably not less than 120 W/(m·K).

An especially preferable thermal conductive material is a coal pitch-based carbon fiber. The coal pitch-based carbon fiber is made of liquid crystal in which molecules are oriented in a single direction. Therefore, this carbon fiber has a high thermal conductivity, and the thermal conductivity of the carbon fiber in an axial di recti on of the fiber is not less than 500 W/(m·K). Since such carbon fibers are dispersed in the base rubber, the heat-conducting rubber 21A having high thermal conductivity is easily obtained.

The above-mentioned coal pitch-based carbon fiber is obtained by subjecting to graphitizing treatment of the pitch fiber. This pitch fiber is obtained by fiber spinning. Examples of raw materials of the pitch fiber are coal tar, coal tar pitch, and coal liquefied material. An example of a producing method of the coal pitch-based carbon fiber is disclosed in Japanese Patent Application Publication No.H7-331536.

As the coal pitch-based carbon fiber, a carbon fiber having a structure of layered polyaromatic molecules is especially preferable. A concrete example of the preferable coal pitch-based carbon fiber is a trade name "K6371" produced by Mitsubishi Plastics, Inc.

An average diameter of the coal pitch-based carbon fibers is not especially limited, but an excellent thermal conductivity is accomplished by way of a di spersal of the carbon fi ber i n the rubber. From this standpoint, the average diameter is preferably not less than 1 µm, more preferably not less than 3 µm, and more preferably not less than 5 µm, and its upper limit is preferably not more than 80 µm, more preferably not more than 30 µm, and more preferably not more than 20 µm.

An average length of the coal pitch-based carbon fibers is not especially limited, but to obtain an excellent dispersive performance in the base rubber, the average length is preferably not less than 0.1 mm, more preferably not less than 1 mm, more preferably not less than 4 mm; and its upper limit is preferably not more than 30 mm, more preferably not more than 15 mm, and more preferably not more than 10 mm. The average length of the coal pitch-based carbon fibers can be measured by observing the cross section of the heat-conducting rubber 21A.

To improve the thermal conductivity of the heat-conducting rubber 21A, an aspect ratio (average length/average diameter) of the coal pitch-based carbon fiber is preferably not less than 100 and more preferably not less than 300. From a viewpoint of the dispersive performance of the carbon fiber, the upper limit of the aspect ratio is preferably not more than 2,000 and more preferably not more than 1,000.

A mixing amount of the coal pitch-based carbon fi bers can be arbitrarily chosen. However, when it is too little, a good thermal conductivity cannot be obtained; and when it is too much, there is a tendency that the rubber hardness of the heat-conducting rubber 21A and the loss tangent tan δ increases. From these standpoints, the mixing amount of the coal pitch-based carbon fibers is preferably not less than 1 part by mass with respect to 100 parts by mass of the base rubber, more preferably not less than 5 parts by mass, and much more preferably not less than 10 parts by mass. And the mixing amount of the thermal conductive material is preferably 60 parts by mass or less with respect to 100 parts by mass of the base rubber, more preferably not more than 50 parts by mass, and still more preferably not more than 40 parts by mass.

A rubber composition of the heat-conducting rubber 21A includes sulfur. By the sulfur, rubber molecules are cross-linked. Other cross-linkers may be used in addition to or instead of the sul fur. The heat-conducti ng rubbers 21A may be cross-linked by electron beam.

The rubber composition of the heat-conducting rubber 21A may include a vulcanization accelerator together with sulfur. Examples of the vulcanization accelerator are sulfenamide-based vulcanization accelerator, guanidine-based vulcanization accelerator, thiazole-based vulcanization accelerator, thiuram-based vulcanization accelerator and dithiocarbamate-based vulcanization accelerator. An especially preferable vulcanization accelerator is the sulfenamide-based vulcanization accelerator. Concrete examples of the sulfenamide-based vulcanization accelerator are N-cyclohexyl-2-benzothiazolyl sulfenamide, N-tert-butyl-2-benzothiazolyl sulfenamide and N,N'-dicyclohexyl-2-benzothiazolyl sulfenamide.

The rubber composition of the heat-conducting rubber 21A may include a reinforcing material. A typical reinforcing material is a carbon black, and it is possible to use FEF, GPF, HAF, ISAF and/or SAF, for example. From a viewpoint of strength of the heat-conducting rubber 21A, a mixing amount of the carbon black is preferably not less than 5 parts by mass with respect to 100 parts by mass of the base rubber, and more preferably not less than 15 parts by mass. From a viewpoint of kneading performance of the rubber composition of the heat-conducting rubber 21A, an upper limit of the mixing amount of the carbon black is preferably not more than 50 parts by mass, and more preferably not more than 40 parts by mass.

In the rubber composition of the heat-conducting rubber 21A, silica may be used together with or instead of the carbon black. Dry silica or wet silica can be used as the silica. Stearic acid, zinc oxide, age inhibitor, wax, or cross-linking aid is added to the rubber composition of the heat-conducting rubber 21A, if needed.

The rubber composition of the heat-conducting rubber 21A is made in a general method, namely, made by kneading the each component with such as a banbury mixer, kneader, open roll, and the like. The heat-conducting rubber 21A is formed in an extrusion molding method with a rubber extruder and a strip winding method of winding the elongated belt like rubber strip, for example.

In the heat-conducting rubber 21A, to dissipate effectively the heat of the tire members comprising the side reinforcing rubber layer 19, the coefficient of thermal conductivity is preferably set to not less than 0.45 W/(m·K), more preferably not less than 0.70 W/(m·K). when the thermally-conductive materials are compounded too much to improve the coefficient of thermal conductivity, the rubber hardness and loss tangent tan δ becomes large, and the rolling resistance may possibly deteriorate. From the viewpoint of this, the coefficient of thermal conductivity of the heat-conducting rubber 21A is preferably not more than 1.5 W/(m·K).

The loss tangent tan δ of the heat-conducting rubber 21A can be arbitrarily set; however, when it is too small , the durability may possibly deteriorate. When it is too large, the rolling resistance may possibly deteriorate. From these viewpoints, the loss tangent tan δ of the heat-conducting rubber 21A is preferably not less than 0.05, more preferably not less than 0.07; and it is preferably not more than 0.15, more preferably not more than 0.10.

The complex modulus E* of the heat-conducting rubber 21A can be arbitrarily set. When it is too small, the durability of the heat-conducting rubber 21A may possibly deteriorate. When it is too large, the rigidity of the heat-conducting rubber 21A excessively improves, and the production efficiency may possibly decrease. From such a viewpoint, the complex modulus E* of the heat-conducting rubber 21A is preferably not less than 3 MPa, more preferably not less than 5 MPa; and it is preferably not more than 30 MPa, more preferably not more than 25 MPa.

In the present description, each of the loss tangent tan δ and the compl ex modulus E* is measured by use of a reed-shaped sample having 4 mm in width, 45 mm in length, and 2 mm in thickness and of a viscoelastic spectrometer (VA-200) under a condition of a temperature of 50 deg. C, a frequency of 10 Hz, and an initial strain of 10%, and a dynamic strain of ±1%.

The heat-conducting rubber 21A in the present embodiment is sheeted and constant in thickness. The maximum thickness W1 of the heat-conducting rubber 21A can be arbitrarily set. However, when the maximum thickness w1 is too small, the heat generated from the side reinforcing rubber layer 19 can be insufficiently absorbed. When it is too large, the rolling resistance may possibly deteriorate, and the ti re mass may possibly increase. From these viewpoints, the maximum thickness w1 of the heat-conducting rubber 21A is preferably not less than 0.3 mm, more preferably not less than 0.5 mm; and it is preferably not more than 3.0 mm, more preferably not more than 2.0.

The heat-conducting rubber 21A as shown in the present embodiment preferably extend from the side-reinforcing-rubber-layer projection-region T at least to the bead bottom 14a of the bead portion 14 and in the bead bottom 14a in the tire axial direction extending. This heat-conducting rubber 21A can contact the rim part 4a of the wheel rim 4, and the heat of the si de rei nforci ng rubber layer 19 dissipates not only to the tire cavity (i) but also to the outside via the wheel rim 4.

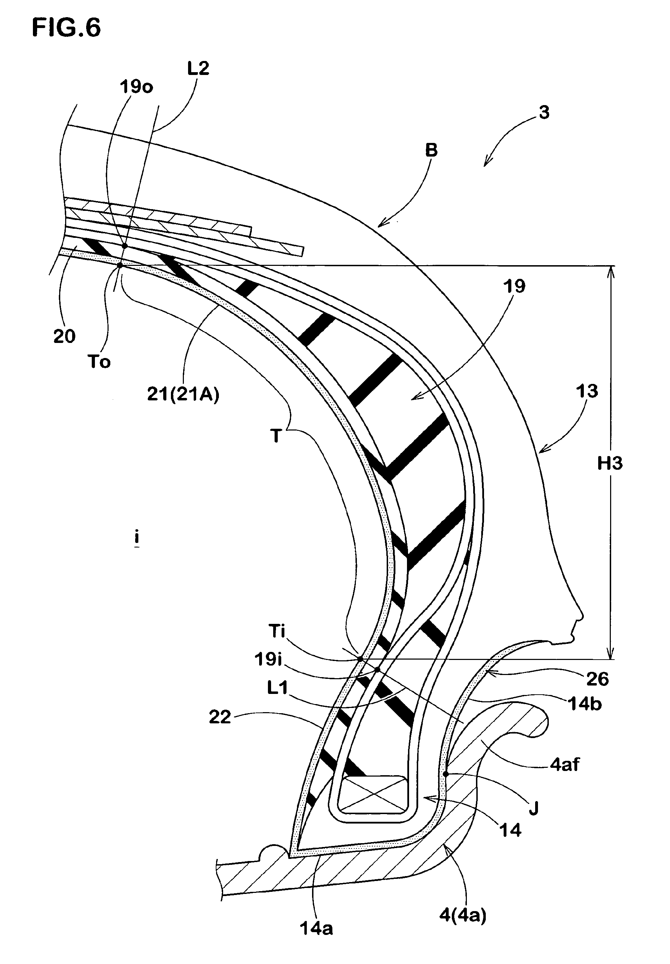

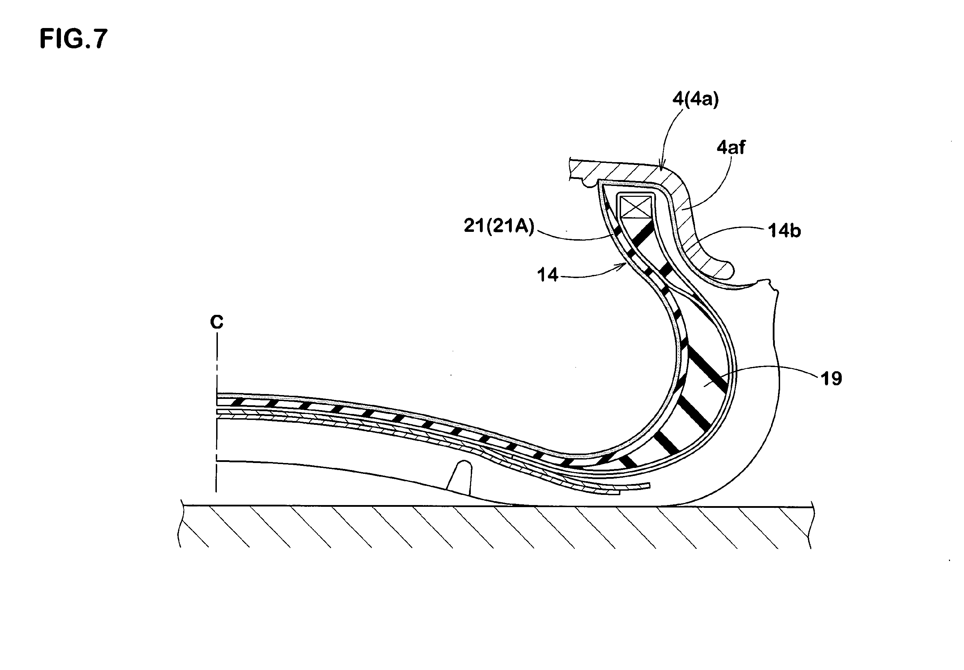

As shown in Fig. 6, the heat-conducting rubber 21 A preferably extends through the bead bottom 14a to the axial outer surface 14b of the bead portion 14. with this arrangement, the heat-conducting rubber 21A can widely contact the rim flange 4af of the wheel rim 4 while run flat running shown in Fig. 7 as well as while ordinal running. Therefore, the area where the heat-conducting rubber 21A abuts on the wheel rim 4 widens, and the heat of the side reinforcing rubber layer 19 effectively dissipates to the outside.

To expose at least a part of the heat-conducting rubber 21A to the air, the heat-conducting rubber 21A preferably comprises an extension 26 extending beyond the separating point J where the rim flange 4af separates from the bead portion 14. such an extension 26 can discharge the heat of the side reinforcing rubber layer 19 directly to the air.

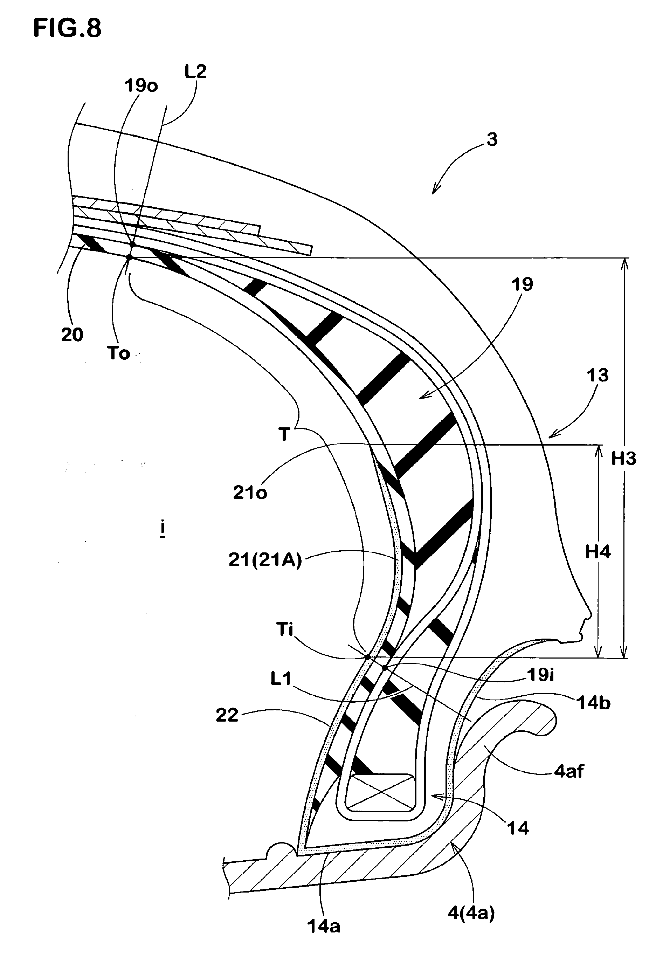

In the above-mentioned embodiment, as an example, the heat-conducting rubber 21A is disposed in the overall width of the tire cavity surface 22 comprising the side-reinforcing-rubber-layer projection-region T, but is not to be considered limited to the embodiment. As shown in Fig. 8, the radi al outer end 21o of the heat-conducti ng rubber 21A may terminate inside the side-reinforcing-rubber-layer projection-region T, for example. Such a heat-conducting rubber 21A can suppress an increase of the tire mass and improve the heat dissipation of the side reinforcing rubber layer 19.

A tire radial length H4 inside the side-reinforcing-rubber-layer projection-region T of the heat-conducting rubber 21A can be arbitrarily set. When it is too small, the heat absorption efficacy of the heat-conducting rubber 21A may relatively decrease. From the viewpoint of this, the length H4 inside the side-reinforcing-rubber-layer projection-region T of the heat-conducting rubber 21A is preferably not less than 30%, more preferably not less than 50% of a tire radial length H3 of the side-reinforcing-rubber-layer projection-region T.

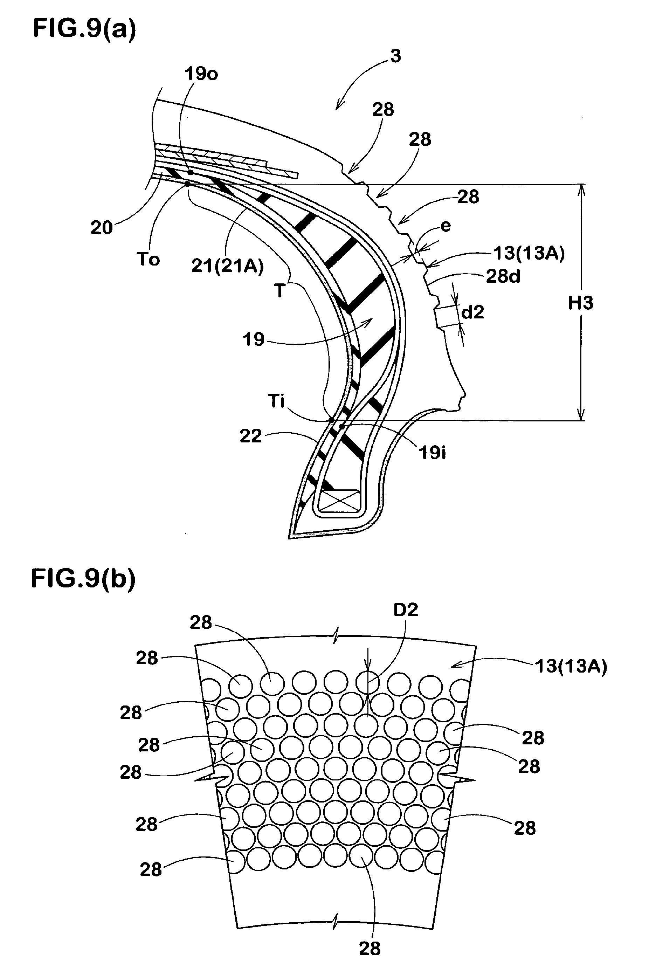

As shown in Figs. 9(a) and 9(b), the run flat tire 3 can be provided in at least one outer surface 13A of the sidewall portion 13 with many dimples 28. Such dimples 28 increase a surface area of the outer surface 13A of the sidewall portion 13 and improve the heat dissipation efficacy. The dimples 28 cause disturbed flow in the outer surface 13A of the sidewall portion 13. Therefore, the heat of the side reinforcing rubber layer 19 preferably discharges also from the outer surface 13A of the sidewall portion 13.

To effect the above-mentioned function, the diameter D2 of the dimple 28 is preferably not less than 2 mm, more preferably not less than 6 mm; and it is preferably not more than 70 mm, more preferably not more 30 mm. The depth (e) of the dimple 28 is preferably not less than 0.1 mm, more preferably not less than 0.5 mm, and it is preferably not more than 4.0 mm, more preferably not more than 2.0 mm. The depth (e) of the dimple 28 is measured as a minimum distance from a virtual line of the outer surface 13A of the sidewall portion 13 to the deepest part of the dimple 28.

In Fig. 9(a), a ratio (d2/D2) is determined as a ratio between a diameter d2 of the sole surface 28d of the dimple 28 and a diameter D2 of the dimple 28. The ratio (d2/D2) is preferably not less than 0.40, and not more than 0.95. The dimple 28 having such a ratio (d2/D2) accomplishes a sufficient content and a small depth (e) in a good balance.

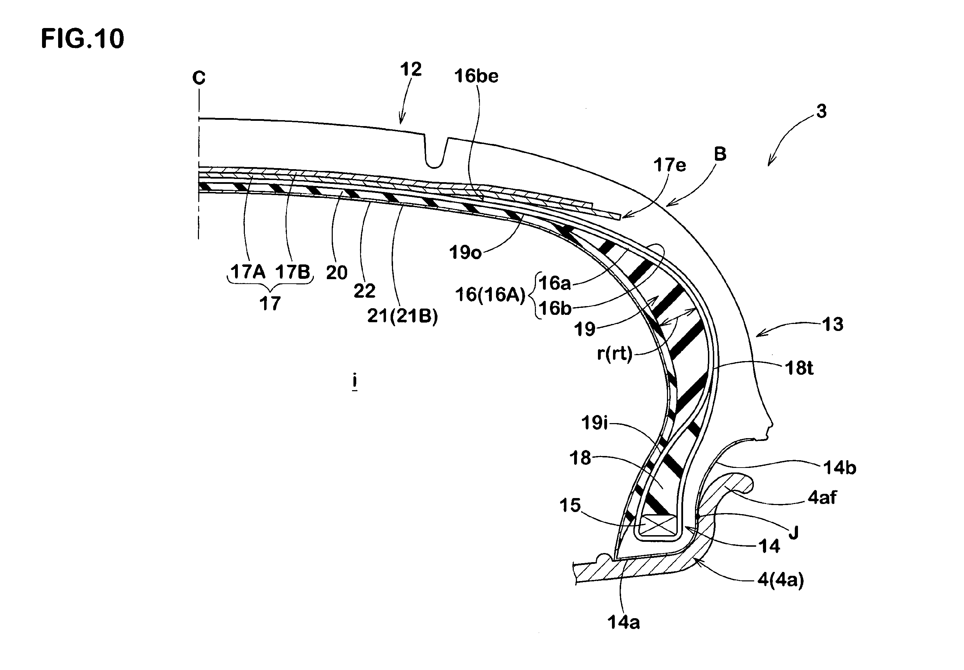

Fig. 10 shows the run flat tire 3 comprising a heat-conducting member 21 of another embodiment. The heat-conducti ng member 21 of this embodiment is formed of a metallic sheet 21B having a comparatively high coefficient of thermal conductivity. This metallic sheet 21B can effectively dissipate the heat of the side reinforcing rubber layer 19 and improve the run flat durability much better.

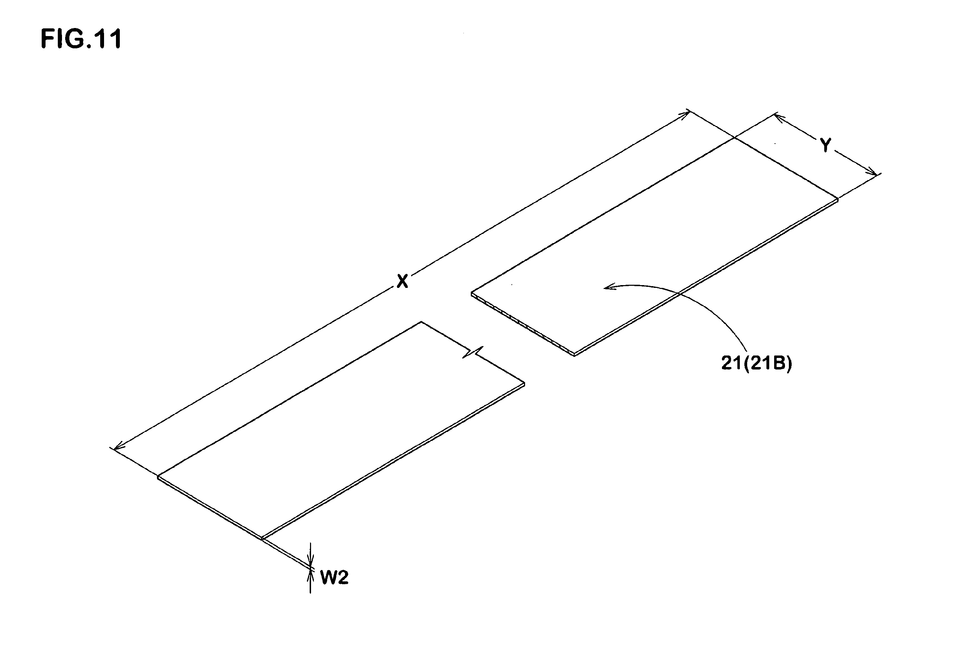

As shown in Fig. 11, the metallic sheet 21B is a belt-like rectangle of which a tire radial length X is longer than a ti re circumferential length Y, for example. A number of this metallic sheet 21B are arranged in the tire circumferential direction. Such a belt-like metallic sheet 21B is superior to a flat sheet extending in the tire circumferential direction, in terms of preventing generation of wrinkles that tend to be caused by a difference of a tire circumferential length between the tread portion 12 and the bead portion 14, and of arranging the sheet more widely in the tire circumferential direction.

The tire radial length x and the tire circumferential length Y of the above-mentioned metallic sheet 21B can be arbitrarily set depending on a cross sectional shape and the like. When the length Y is too small, it is necessary to attach more the sheets, and the production efficiency may decrease. However, when the length Y is too large, wrinkles and the like may generate in the bead portion 14. From these viewpoints, the tire circumferential length Y of the metallic sheet 21B is preferably not less than 5 mm, more preferably not less than 10 mm, and it is preferably not more than 100 mm, more preferably not more than 80 mm.

The thickness w2 of the metallic sheet 21B can be arbitrarily set. When it is too small, the rigidity excessively decrease, and a separation and damage may possibly generate at an early time of running. However, when the thickness w2 is too large, there may be possibly an interference with a free deformation of the tire. From the viewpoint of this, the thickness w2 of the metallic sheet 21B is preferably not less than 0.02 mm, more preferably not less than 0.05 mm, much more preferably not less than 0.08 mm; and it is preferably not more than 0.2 mm, more preferably not more than 0.15 mm, furthermore preferably not more than 0.10 mm.

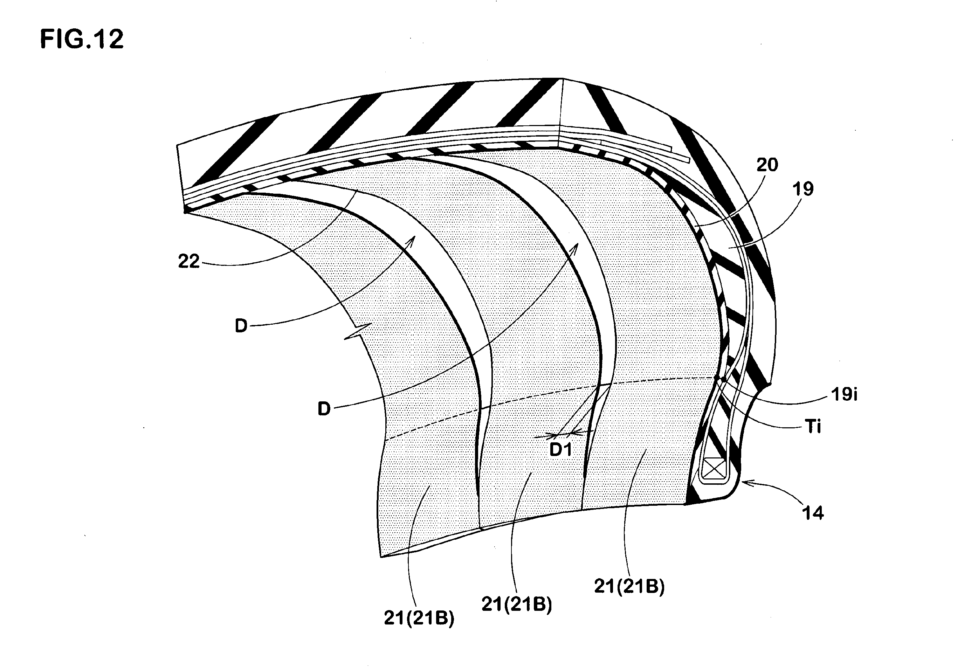

The belt-like metallic sheets 21B and 21B are arranged adjacently in the tire circumferential direction. The metallic sheets can be arranged wi thout any interspace or can be arranged wi th an interspace between them. As shown in Fig. 12, the metallic sheets 21B in the present embodiment are arranged without interspace at the bead portion 14 having a small circumferential length and with an interspace D at the tread portion 12. In this case, in the interspace D between the circumferentially adjacent metallic sheets 21B and 25 increases progressively toward the tire radial direction.

when the interspace D is too large, the heat of the side reinforcing rubber layer 19 may possibly dissipate insufficiently. From such a viewpoint, a tire circumferential length D1 of the interspace D is preferably not more than 200 mm, more preferably not more than 100 mm. The length D1 of the interspace D is measured on an inner end Ti of the side-reinforcing-rubber-layer projection-region T (shown in Fig. 5).

As shown in Fig. 10, the metallic sheet 21B preferably extends from the bead bottom 14a to the axial outer surface 14b of the bead portion 14, just like the above-mentioned heat-conducting rubber 21A. Especially, the metallic sheet 21B preferably comprises an extension 29 extending the separating point J of the rim flange 4af and the bead portion 14. Such a metallic sheet 21B can discharge the heat of the side reinforcing rubber layer 19 more effectively to the outside.

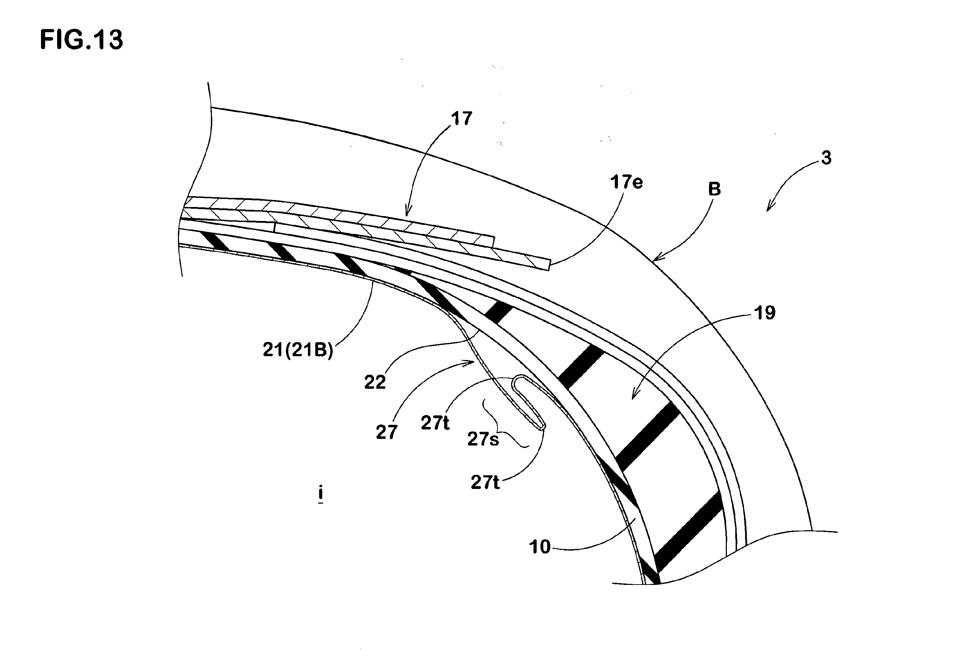

As shown in Fig. 13, the metallic sheet 21B may comprise a slack 27 slacking with separation from the tire cavity surface 22. Since the slack 27 in the present embodiment is provided with two turn-up portions 27t and 27t turned up in the vicinity of a buttress portion B near the outer end 17e of the belt layer 17, and the overlap 27s is formed. This slack 27 can absorb expansion and contraction in the tire radial direction of the tire cavity surface 22 while high-pressed air filling into the tire cavity (i) and while run fl at running so as to prevent a large shearing force between the tire and an adhering surface. Therefore, the separation and the destruction metallic sheet 21B can be suppressed.

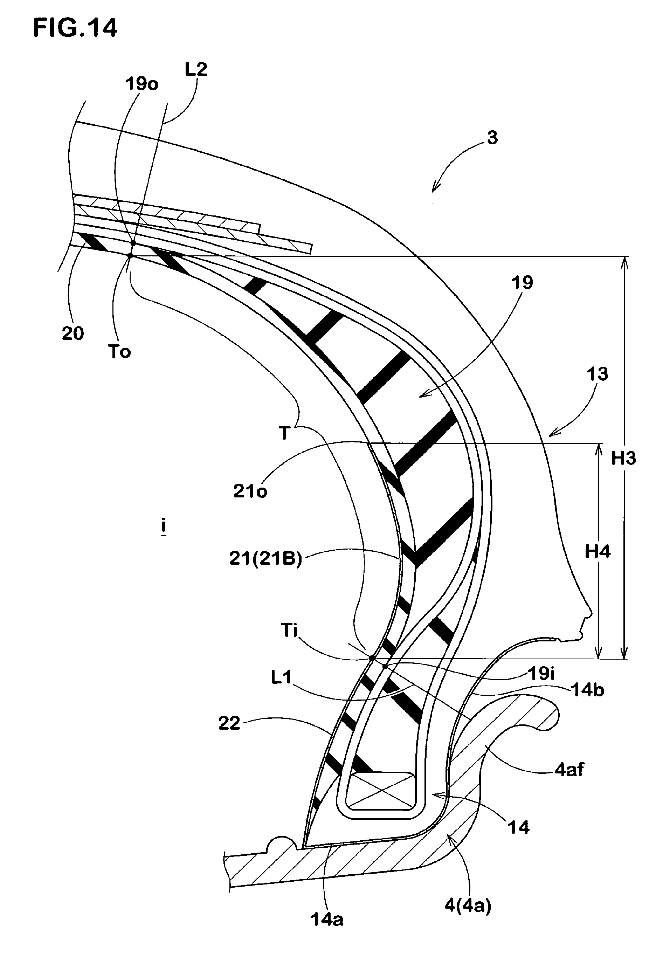

As shown in Fig. 14, in the metallic sheet 21B as well as the heat-conducting rubber 21A, the radial outer end 21o of the metallic sheet 21B can terminate inside the side-reinforcing-rubber-layer projection-region T, for example. This can preferably suppress the increase of tire mass and can discharge the heat of the side reinforcing rubber layer 19.

The metallic sheet 21B is not made of a particularly limited, but a metal arbitrarily chosen among silver, copper, gold, aluminum, steel, and platinum, or an alloy mixed not less than two kinds of these metals, for example. In the present embodiment, in view of cost performance and processability, the metallic sheet 21B is made of aluminum alloy.

The coefficient of thermal conductivity of the metallic sheet 21B can be arbitrarily set. When it is too small, the heat of the side reinforcing rubber layer 19 may possibly conduct ineffectively. From this standpoint, the coefficient of thermal conductivity of the metallic sheet 21B is preferably not less than 100 W/(m·K), more preferably not less than 200 W/(m·K), furthermore preferably not less than 300 W/(m·K).

There are acceptable different methods for fixation of the metallic sheet 21B to the ti re cavity surface 22, and an adhesive agent and/or double-faced adhesive tape and the like can be used, for example. Moreover, the adhesive agent can be used as a tape-type adhesive agent applied previously on one surface of the metallic sheet 21B. The adhesive agent is preferably a silicon series agent having flame resistance, weatherproof, and aging resistance.

As shown in Fig. 3, the wheel rim 4 comprises a rim part 4a and a disk part 4b integrally formed or attached to the rim part 4a. The disk part 4b is fixed to a hub (not shown) via a braking device 5 comprising a brake rotor 5a and a calliper 5b having a brake pad. The hub is attached to a knuckle 6 via shank receiver and the like. The knuckle 6 is disposed in carbody 1a movably upward and downward and turnably via a suspension device S.

As shown in Fig. 1, the vehicle 1 is provided with a cooling device 8 to cool the run flat tire 3 by blasting a fluid G (shown in Fig. 3) to the above-mentioned run flat tire 3 and/or the above-mentioned wheel rim 4. In the present embodiment, the fluid G is a gas G1, for example.

The cooling device 8 of the present embodiment comprises, as shown in Fig. 1, a duct 9 including one end and the other end. The one end is an air intake port 9i, and the other end is an outlet 9o to blow the air. The cooling device 8 comprises a changeover device 10 to blast at least a part of the air flowing inside the duct 9 toward the run flat tire 3 and/or the wheel rim 4 at the time of depression of the air pressure of the run flat tire 3, and a control device 31 to control this changeover device 10 and the like.

The air intake port 9i of the duct 9 is disposed in a front grille (not shown) and a hood bulge (not shown) and the like of the vehicle 1 so as to open interiorly, for example. This arrangement allows to intake the air into the air intake port 9i naturally by running of the vehicle 1 wi thout using a fan and the like. And, to prevent foreign matters from getting into the duct 9, the air intake port 9i is preferably provided with an air filter (f) and the like.

The duct 9 diverges into four passages on a downstream side of the air intake port 9i , for example. Respective di vergi ng passages 9a to 9d extend close to the respective four wheels 2. The most downstream side of each of the diverging passages 9a to 9d is provided with an outlet 9o blasting the air conducted with the duct 9. In this embodiment, as shown in Fig. 3, a part located near the outlet of each of the diverging passages 9a to 9d are formed as a freely-deformable flexible 32.

As shown in Figs. 2 and 3, the changeover tool 10 of the embodiment includes a straightly moving type actuator 33, for example. Various types of actuators can be employed as the actuator 33 such as an actuator utilizing a fluid pressure, and an actuator 33 that converts rotating motion of a motor into straight motion to be utilized.

The actuator 33 includes a cylindrical body 33a that is fixed to a chassis s of the vehicle body 1a so that the actuator 33 does not interfere with a wheel house cover 34 and the suspension device S. The actuator 33 also includes a rod 33b that can project from and retract into the body 33a. In this embodiment, the actuator 33 is mounted such that the rod 33b moves in a longitudinal direction of the vehicle body 1a. A concrete mounting manner can variously be modified of course. A tip end of the rod 33b is fixed to a portion of the duct 9 in the vicinity of the outlet 9o through a connecting tool 35.

The actuator 33 is in a posi ti on where its rod 33b retracts as its initial state. At that time, the outlet 9o of the duct 9 is disposed at a position "A" directed to the brake device. More specifically, the outlet 9o is di sposed such that a center axis CL of the outl et 9o intersects wi th a rotor surface of the brake rotor 5a of the brake device 5 (at substantially right angle in the embodiment).

As shown with a virtual line, if the rod 33b of the actuator 33 is extended, it is possible to move the outl et 9o of the duct 9 and to di spose the outl et 9o at a position "B" directed to the run flat tire 3 and/or the wheel rim 4. More specifically, the center axis CL of the outlet 9o is disposed such that it intersects with the inner sidewall 13 of the sidewall portion 13 and/or the rim flange 4af of the wheel rim 4 (shown in Fig. 4).

As shown in Fig. 1, the control device 31 is connected with an air-pressure monitoring device 7 disposed in each wheel 2 and monitoring the air pressure of the wheel 2. For the air-pressure monitoring device 7 , the following di rect type device and indirect type device are arbitrarily adopted, for example.

In the case of the direct type air-pressure monitoring device 7, a pressure sensor, which detects an air pressure in a tire, is assembled into each wheel 2. The pressure sensor is configured integrally with an air valve in some cases. A sensing signal which corresponds to the air pressure detected by the pressure sensor is sent to a control device 31 on the side of the vehicle body by a signal line through a radio or slip ring.

In the case of the indirect type air-pressure monitoring device 7, a sensor for detecting a rotation speed of each wheel 2 is used. A sensing signal of the sensor is input to the control device 31 such as a microcomputer. By carrying out a predetermined calculation using this sensing signal, a wheel 2 at a state of run flat running is specified. More specifically, its dynamic rotation radius of the run flat ti re 3 during the run flat running becomes small (that is to say, a rotation speed increases as compared wi th other wheels having normal air pressures). Utilizing this, one of four wheels 2, which is at the state of run flat running, is specified from the rotation speed ratio and the like of the four wheels (see Japanese Patent No.4028848 and the like).

The control device 31 determines and speci fi es the run flat tire 3, whose air pressure becomes lower than a predetermined value, as a tire at the state of run flat running based on the input sensing signal. The control device 31 controls the changeover tool 10 for the tire and can blast at least part of the air in the duct 9 toward the run flat tire 3.

The effect of the cooling device 8 of the embodiment having the above-described configuration will be described.

Firstly, when the vehicle 1 normally runs with the respective wheels 2 under an appropriate air pressure P2, the control device 31 does not change the changeover device 10, and the outlet 9o of the diverging passage 9a is disposed in a position "A" directed to the braking system. Therefore, the air taken from the air induction port 9i of the duct 9 is blasted to the brake devices 5 of the wheels 2 through the diverging passages 9a to 9d. According to this, the brake devices 5 are cooled and their braking effects are enhanced.

Secondly, when the run flat tire 3 of the front right wheel 2FR becomes at the state of run flat running because of taking a nail during running, for example, the control device 31 determines that the run flat tire 3 of the front right wheel 2FR becomes at the state of run flat running based on the sensing signal from the air-pressure monitoring device 7. The control device 31 outputs a driving signal to the changeover tool 10 and extends the rod 33b. According to this, as shown with a virtual line in Fig. 3, the outl et 90 of the diverging passage 9a is changed over to a position "B" directed to the sidewall portion 13 of the run flat tire 3 and/or wheel rim 4. Therefore, while run flat running, the tire members generating heat are subjected to cooling via the sidewall portion 13 and/or wheel rim 4.

For a wheel having a run flat tire 3 filled with a normal air pressure, air blows to the brake device 5 as in the past. Hence, it is possible to continuously prevent the excessive heat of the brake device 5.

Therefore, according to the cooling device 8 of the present embodiment, at the time of normal running of the vehicle 1 in which the air pressure in the run flat tire 3 is not reduced, the blow of the air flowing through the duct 9 toward the brake device 5 provided in each wheel 2 can enhance the braking effect.

And, in the case of the run flat running, the blow of the gas G flowing through the duct 9 toward the run flat tire 3 and/or wheel rim 4 for cooling can laten the temperature rise. Furthermore, the heat of the tire members of the run flat tire 3 can be effectively discharged and cooled by a synergetic effect between the heat-conducting member 21 and the cooling device 8; and the run flat durability can be super-critically improved. Therefore, in the vehicle 1 of the present embodiment, it is possible to suppress the heat generation while run flat running and to enhance the durability without excessively increasing a vertical spring constant of the tire 3 (i.e., without extremely deteriorating the riding comfort).

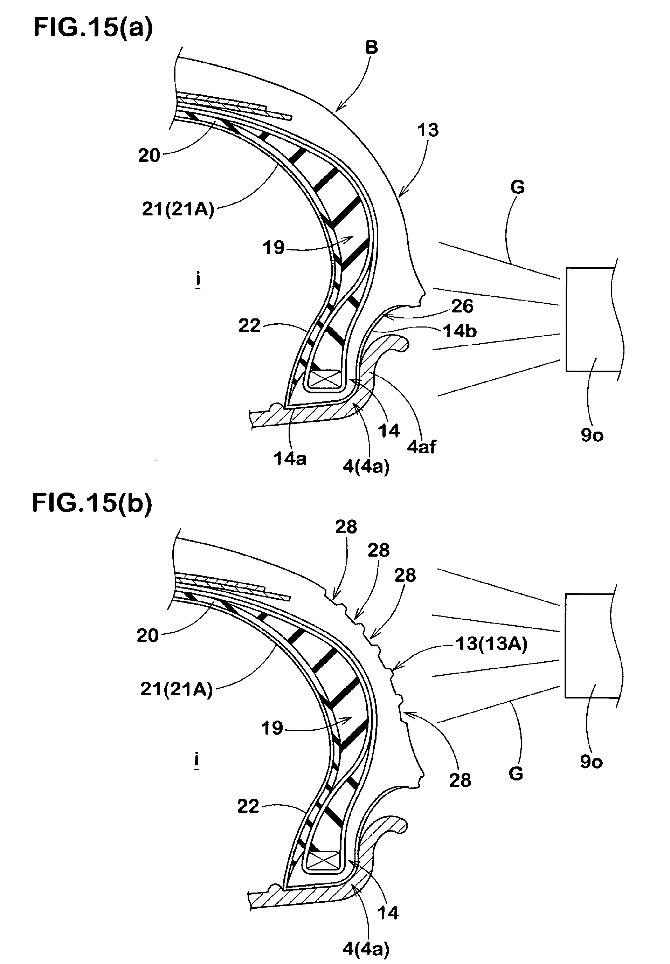

As shown in Fig. 15 (a), at least part of the heat-conducting member 21 of the run flat tire 3 extends to the bead bottom 14a of the bead portion 14, it is desirable to blast at least part of the gas G1 toward the wheel rim 4. with this arrangement, since the heat-conducti ng member 21 is cooled down through the wheel rim 4 having a comparatively high coefficient of thermal conductivity, the heat of the tire members including the side reinforcing rubber layer 19 can be effectively discharged, and the run flat durability can be improved.

when the heat-conducting member 21 is provided with an extension 26 exposed in the air, it is desirable to blast at least part of the gas G1 toward the extension 26. with this arrangement, the heat-conducti ng member 21 is directly cooled by the gas G1, and the heat of the ti re members including the side reinforcing rubber layer 19 can be discharged more effectively.

As shown in Fig. 15 (b), when a dimple 28 is arranged in the outer surface 13A of the sidewall portion 13, at least part of the gas G1 is preferably blast to the dimple 28. The surface area of the outer surface 13A is enlarged by the dimple 28, and blasting the gas G1 can discharge the heat effectively.

It is also possible to provide in each of the run flat tires 3 with a plural of outlets 9o, for example, so as to blast the gas G1 to the whole ti re comprising the tread portion 12 and the sidewall portion 13 for cooling the run flat tire 3 more effectively.

In this embodiment, the air is used as the gas G, but if the gas G can cool the run flat ti re 3, various kinds of gases can be employed in addition to air. For example, it is also possible to provide in the vehicle 1 with a gas cylinder in which gas other than air is accommodated and to blast the gas G to the run flat tire 3. It is preferable to blast the gas G toward the run flat tire 3 at a temperature of not more than 60 deg. C, more preferably not more than 50 deg. C, and much more preferably not more than 40 deg. C. As shown in Fig. 1, to lower the temperature of the gas G1, a heat exchanger 36 such as an intercooler may be included in somewhere in the duct 9.

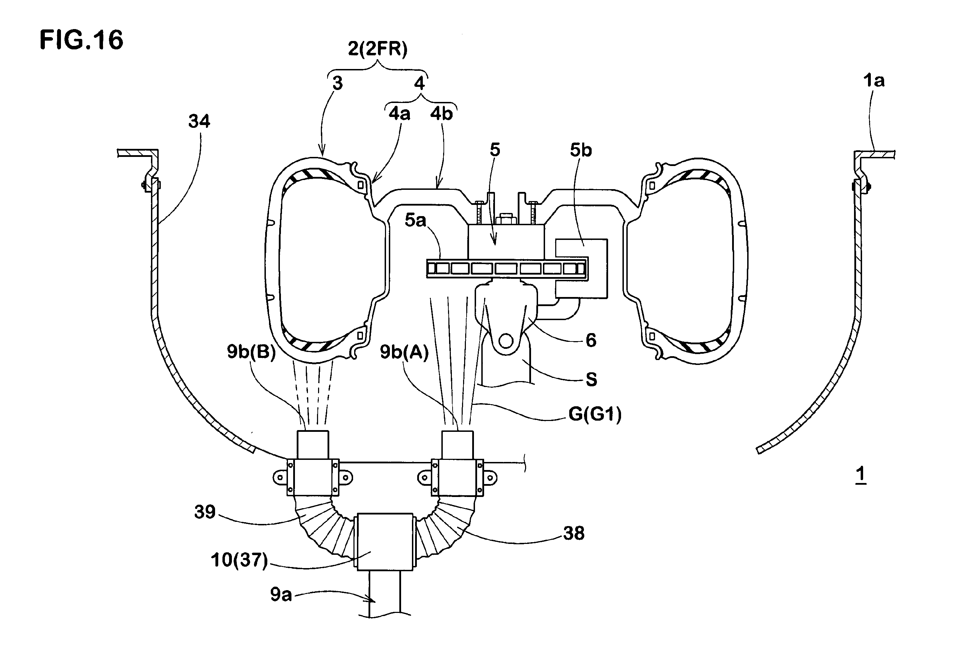

Fig. 16 shows a surround of the right-front wheel comprising a changeover device 10 in another embodiment of the present invention.

The changeover device 10 in this embodiment comprises a changeover valve 37 disposed in a downstream of the respective diverging passages 9a to 9d of the duct 9. This changeover valve 37 is connected with a fi rst diverging passage 38 arranged in the position "A" where the outlet 9b faces to the braking device 5, and with a second diverging passage 39 arranged in the position "B" where the outlet 9b faces to the sidewall portion 13 of the run flat tire 3. The changeover valve 37 is an electromagnetic valve, for example. A control device 31 can change between the first diverging passage 38 or the second diverging passage 39 and can blow the air flowing in the duct 9. For the changeover valve 37 of the present embodiment, a valve fine-tunable of the discharge rate of the first diverging passage 38 and the second diverging passage 39 can be used.

The changeover valve 37 can change the blasting directions of the gas G1 between the run flat tire 3 and the braking device 5 by use of the changeover valve 37, and it can simplify the structure of the changeover device 10. In the present embodiment, the discharge rate of the first diverging passage 38 and the second diverging passage 39 is fine-tunable by the control device 31. The discharge rate can be changed between the run flat tire 3 and the braking device 5 in accordance with circumstances of the run flat tire 3, and the heat generations from the both of them can be prevented.

In the present embodiment, the first diverging passage 38 faces to the braking device 5, and the second diverging passage 39 faces to the sidewall portion 13, respectively. However, it can face to an extension 26 of the heat-conducting member 21 as shown in Fig. 15(a) and a dimple 28 as shown in Fig. 15(b), for example. In such an aspect, the extension 26 and the dimple 28 can be cooled at the same time, and the heat generation of the tire member of the run flat tire 3 can be preferably restricted.

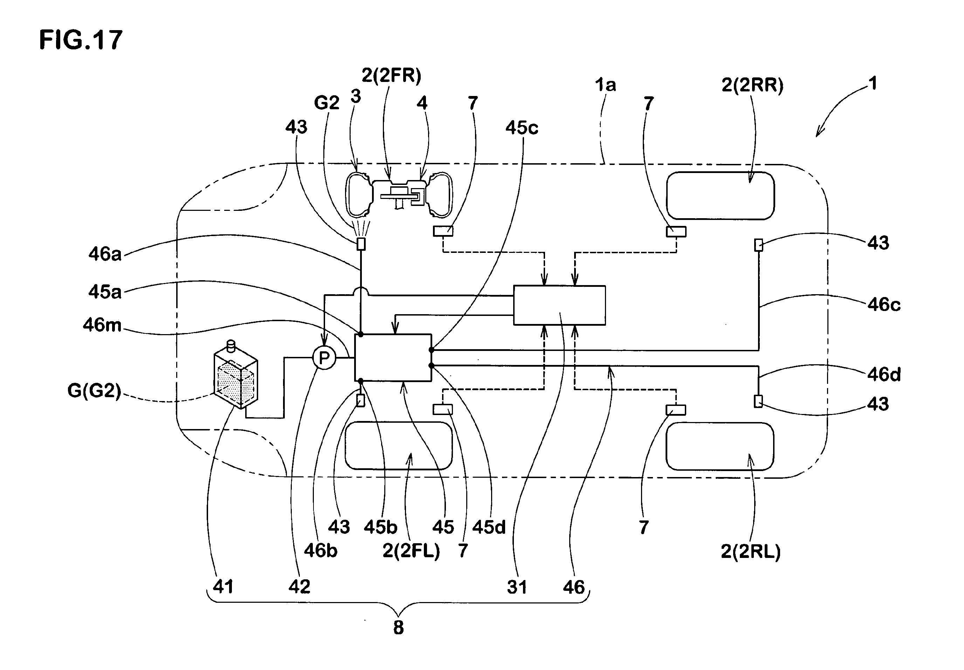

Fig. 17 shows a yet another embodiment of the present invention of a vehicle comprising a cooling device 8.

The cooling device 8 of this embodiment, a liquid G2 as the above-mentioned fluid G is blasted. This cooling device 8 comprises
a tank 41 storing the liquid G2,
a pump 42 to pump the liquid G2 from the tank 41,
a flow passage 46 having one end being connected with the pump 42 and the other end communicating with the discharge port 43 facing to the run flat tire 3, and
a control device 31 controlling the pump 42.

various types of liquids can be employed as the liquid G2, which attaches to the run flat tire 3 so as to draw heat from the tire, and water that has a large latent heat of vaporization is employed in the present embodiment. Moreover, various materials may be added to the water. The liquid G2 is preferably discharged at a temperature of more than 60 deg. C, more preferably not more than 50 deg. C to cool the rolling run flat tire 3.

The above-mentioned tank 41 and the pump 42 are stored in a storage space under a hood of the carbody 1a, for example. Therefore, when opening the hood of the vehicle 1 (not shown), refilling of the liquid G2 in the tank 41 and maintaining and the like can be easily operated. Moreover, the tank 41 and the pump 42 can be share wi th a wi ndshi el d washer apparatus as standard equipment (not shown) in a passenger car. This arrangement makes it possible to compose the cooling device 8 of a few additional components easily and at low cost.

The above-mentioned di scharge port 43 is disposed in each of the wheel s 2 so as to face to the run flat tire 3 and/or the wheel ri ms 4. The di scharge port 43 of the present embodiment comprises a nozzle orifice for a high-pressure injection or fuel blast. The discharge port 43 may be a port discharging the liquid G2 toward the sidewall portion 13 facing to the vehicle inside, for example; and it may be a port discharging toward the tread portion 12.

The above-mentioned flow passage 46 comprises
a changeover valve 45 in a solenoid operation type, for example;
a single main flow passage 46m connecting the changeover valve 45 with the pump 42; and
a plural of diverging flow passages 46a, 46b, 46c, and 46d of which each one end is connected with each of the output ports 45a, 45b, 45c, and 45d of the changeover valve 45, and of which the each other end is connected with the discharge ports 43 facing to the run flat tire 3 of the wheels 2FR, 2FL, 2RR, 2RL.

For example, when the run flat tire 3 of the ri ght-front wheel 2FR becomes at the state of run flat running, the control device 31 of this cooling device 8 considers on the basis of a sensing signal from the air-pressure monitoring device 7 that the run flat tire 3 of the right-front wheel 2FR is at the state of run flat running. The control device 31 changes the output port into "45a" by outputting a high leveled manipulated signal to the changeover valve 45, and outputs a high leveled driving signal to the pump 42. Therefore, the liquid G2 is blasted on the run flat tire 3 and/or the wheel rim 4 while running, through the tank 41, the pump 42, the main flow passage 46m, the output port 45a of the changeover valve 45, the diverging flow passage 46a, and the discharge port 43. The liquid G2 attached to the run flat tire 3 and/or the wheel rim 4 widely flows by a centrifugal at the time of running, and it can absorb the heat from a broad range of the tire outer surface.

A necessary fluid measure per discharge to cool the tire is determined according to a tire size and the like. It is preferably not less than 30 cm³, more preferably not less than 50 cm³, much more preferably not less than 100 cm³. However, the fluid measure has a limit to store in the tank 41. If the fluid measure per discharge increases, frequency of discharge will decrease. From the viewpoint of this, the fluid measure per discharge is preferably not more than 300 cm³, more preferably not more than 250 cm³ much more preferably not more than 200 cm³.

An interval of time of intermittently-discharging the liquid G2 is not limited in particular, but when the interval of time is too short, the liquid G2 in the tank 41 becomes consumed precociously; and when the interval of time is too long, the heat generation of the tire cannot be possibly suppressed enough. Therefore, on the basis of the run flat running in an expressway (at a running speed of about 80 km/h), it is preferably to set the interval of time anywhere from 5 to 15 minutes.

when the extension 26 (shown in Fig. 15(a)) of the heat-conducti ng member 21 and/or the dimple 28 (shown in Fig. 15(b)) are equipped, it is preferable that the liquid G2 is preferably blasted preferentially on them, respectively. With such an arrangement, the heat of the tire member is effectively absorbed.

Especially preferred embodiment of the present invention has been described in detail, the invention is not limited to the illustrated embodiment, and various modifications can be made.

### Example

In order to confirm an effect of the present invention, a running test was conducted by using a vehicle. A specification of the vehicle is as follows:
Displacement: Domestically-produced rear-wheel-drive vehicle of 4300 cc displacement
Camber angle of front wheel: 1 deg. (negative)
Gas of cooling device: Air
Liquid of cooling device: water.
   A test run flat tire mounted on the vehicle had a basic structure with the exception of a heat-conducting member shown in Fig. 4, and has a heat-conducting member shown in Table 1. As a comparative example, also a test run flat tire not comprising the heat-conducting member rubber (Reference Example 1) was made, and the same test was conducted.
Tire size: 245/40R18
Rim size: 18 x 8.5 J
Material of metallic sheet: Aluminum alloy

Each compound of the heat-conducting rubber was shown in Table 2. The details were as follows:
Natural rubber (NR): RSS#3
Styrene butadiene rubber (SBR) : SBR1502 manufactured by Sumitomo Chemical Company, Limited
Butadiene rubber (BR): BR150B manufactured by ube Industries, Ltd.
Isoprene rubber (IR): IR2200 manufactured by JSR corporation
Modified styrene butadiene rubber (modified SBR): E15 manufactured by Asahi Kasei Chemicals Corporation
Modified butadiene rubber (modified BR): Modified butadiene rubber (vinyl content of 15 percent by mass; R¹, R², and R³ = -OCH₃; R⁴ and R⁵ = - CH₂CH₃; n = 3) manufactured by Sumitomo Chemical Company, Limited.
Carbon black: Diablack E manufactured by Mitsubishi Chemical Corporation (FEF, N2SA: 41 m²/g; DBP oil absorptiveness: 115 ml/100g)
Silica: ultrasil VN3 (N2SA: 152 m²/g) manufactured by Degussa
Coal pitch-based carbon fibers: K6371T (coal pitch-based carbon fiber: average fiber diametre of 11 µm, average fiber length of 6.3 mm) manufactured by Mitsubishi Plastics, Inc.
PAN system carbon fiber: TORAYCA T300 manufactured by Toray Industries, Inc.
Antioxidant 6C:
   Antigen 6C (N-(1,3-Dimethylbutyl)N'-phenyl-p-phenylenediamine) manufactured by Sumitomo Chemical Co. Ltd
Zinc oxide: Zinc oxide type 2 manufactured by Mitsui Mining & Smelting Co., Ltd.
Stearic acid: Tsubaki manufactured by NOF Corporation
Antioxidant FR: Antigen FR manufactured by Sumitomo Chemical Company, Limited (refined substance obtained by reaction of amine and ketone, in which amine does not stay behind; quinoline system rubber antioxidant) Sulfur: Powder sulfur (manufactured by Karuizawa Iou Kabushiki Kaisha) Vulcanization accelerator: NOCCELER NS (N-tert-butyl-2-benzothiazolesulfenamide) manufactured by Ouchi Shinko Chemical Industrial Co., Ltd.)
vulcanization booster agents: TACKIROL V-200 manufactured by Taoka Chemical Co., Ltd.

The test method is as follows.

### <Run flat durability>

Each test tire was mounted on a rim where a valve core was taken off, and the tire was rolled on a drum tester under a condi ti on of having internal pressure of zero and at the speed of 80 km/h, and longitudinal load of 4.14 kN. A running distance was measured a running distance to the destruction of the tire. Evaluation is displayed using indices with Reference Example 1 being 100, and the larger the numeric values are, the more favorable it is.

### <Mass of tire>

Each test tier was measured a mass per tire. Evaluation is defined as the reciprocal of the mass and displayed using indices with Reference Example 1 being 100. The larger the numeric values are, the more favorable it is.

### <Longitudinal spring constant>

The test tire mounted on the above-mentioned rim contacted with a flat ground surface under a condition of an internal pressure of 200 kPa and a load of 4.59 kN, and a longitudinal strain amount of the ti re was measured. The load 4.59 kN was divided by the longitudinal strain amount to obtain approximately a longitudinal spring constant. Evaluation is defined as the reciprocal of the mass and displayed using indices with Reference Example 1 being 100. The smaller the numeric values are, the more the longitudinal spring becomes small, and favorable it is for ride comfort. The test resul ts are shown in Table 1 and Table 2.

**[Table 1-1]**

| | Com. Ex. 1 | Com. Ex. 2 | Com. Ex. 3 | Com. Ex. 4 | Com. Ex. 6 | Com. Ex. 7 | Com. Ex. 8 | Ex. 1 | Ex. 2 | Ex. 3 | Ex. 4 | Com. Ex. 9 |
|---|---|---|---|---|---|---|---|---|---|---|---|---|
| Cross-sectional view of Sidewall portion | Fig. 18 | Fig. 5 | Fig. 5 | Fig. 8 | Fig. 10 | Fig. 14 | Fig. 5 | Fig. 5 | Fig. 8 | Fig. 10 | Fig. 14 | Fig. 10 |
| Liquid of Cooling device | - | - | - | - | - | - | Gas | Gas | Gas | Gas | Gas | - |
| Heat-conducting member(*1) | - | A | A | A | B | B | A | A | A | B | B | B |
| Coefficient of thermal conductivity (W/·mK) of Heat-conducting member | - | 0.29 | 0.905 | 0.905 | 250 | 250 | 0.29 | 0.905 | 0.905 | 250 | 250 | 250 |
| Compound of Heat-conducting rubber | - | Compound 1 | Compound 2 | Compound 2 | - | - | Compound 1 | Compound 2 | Compound 2 | - | - | - |
| Thickness W1 (mm) of Heat-conducting rubber | - | 1.0 | 1.0 | 1.0 | - | - | 1.0 | 1.0 | 1.0 | - | - | - |
| Complex Modulus E* (Mpa)of Heat-conducting rubber | - | 6.7 | 8.5 | 8.5 | - | - | 6.7 | 8.5 | 8.5 | - | - | - |
| Loss tangent tan δ of Heat-conducting rubber | - | 0.073 | 0.075 | 0.075 | - | - | 0.073 | 0.075 | 0.075 | - | - | - |
| Length H3 (mm) of Side-reinforcing-rubber-layer projection-region | - | 52 | 52 | 52 | 52 | 52 | 52 | 52 | 52 | 52 | 52 | 52 |
| Length H4 (mm) of Heat-conducting member in Side-reinforcing-rubber-layer projection-region | - | 52 | 52 | 40 | 52 | 52 | 52 | 52 | 40 | 52 | 52 | 52 |
| Ratio (H4/H3)(%) | - | 100 | 100 | 77 | 100 | 100 | 100 | 100 | 77 | 100 | 100 | 100 |
| Thickness W2 (mm) of Metallic sheet | - | - | - | - | 0.09 | 0.09 | - | - | - | 0.09 | 0.09 | 0.09 |
| Presence of Slack | - | - | - | - | None | None | - | - | - | None | None | None |
| Maximum thickness rt (mm) of Side-reinforcing rubber layer | 10 | 10 | 10 | 10 | 10 | 10 | 10 | 10 | 10 | 10 | 10 | 5 |
| Presence of Dimple | None | None | None | None | None | None | None | None | None | None | None | None |
| Diameter D2 (mm) of Dimple | - | - | - | - | - | - | - | - | - | - | - | - |
| Depth (e) (mm) of Dimple | - | - | - | - | - | - | - | - | - | - | - | - |
| Diameter d2 (mm) of Sole surface of Dimple | - | - | - | - | - | - | - | - | - | - | - | - |
| Ratio (d2/D2) | - | - | - | - | - | - | - | - | - | - | - | - |
| Runflat durability (index) [Larger is better.] | 100 | 106 | 136 | 121 | 177 | 173 | 153 | 212 | 196 | 290 | 288 | 110 |
| Mass of Tire (index) [Larger is better.] | 100 | 95 | 95 | 97 | 100 | 100 | 95 | 95 | 97 | 100 | 100 | 110 |
| Longitudinal spring constant (index) [Smaller is better.] | 100 | 102 | 102 | 101 | 100 | 100 | 102 | 102 | 101 | 100 | 100 | 97 |

| | | | | | | | | | | | | |
|---|---|---|---|---|---|---|---|---|---|---|---|---|
| *1 A: Heat-conducting rubber B: Metallic sheet | | | | | | | | | | | | |

**[Table 1-2]**

| | Ex. 5 | Ex. 6 | Ex. 7 | Ex. 8 | Ex. 9 | Ex. 10 | Ex. 11 | Ex. 12 | Ex. 13 | Ex. 14 | Ex. 15 | Ex. 16 |
|---|---|---|---|---|---|---|---|---|---|---|---|---|
| Cross-sectional view of Sidewall portion | Fig. 10 | Fig. 6 | Fig. 6 | Fig. 6 | Fig. 6 | Fig. 6 | Fig. 6 | Fig. 6 | Fig. 6 | Fig. 6 | Fig. 6 | Fig. 6 |
| Liquid of Cooing device | Gas | Gas | Gas | Gas | Gas | Gas | Gas | Gas | Gas | Gas | Gas | Gas |
| Heat-conducting member (*1) | B | A | A | A | A | A | A | A | A | A | A | A |
| Coefficient of thermal conductivity (W/·mK) of Heat-conducting member | 250 | 0.905 | 0.406 | 0.812 | 0.952 | 0.392 | 0.881 | 0.892 | 0.867 | 0.877 | 0.905 | 0.905 |
| Compound of Heat-conducting rubber | - | Compound 2 | Compound 3 | Compound 4 | Compound 5 | Compound 6 | Compound 7 | Compound 8 | Compound 9 | Compound 10 | Compound 2 | Compound 2 |
| Thickness W1 (mm) of Heat-conducting rubber | - | 1.0 | 1.0 | 1.0 | 1.0 | 1.0 | 1.0 | 1.0 | 1.0 | 1.0 | 0.5 | 1.5 |
| Complex Modulus E'(Mpa) of Heat-conducting rubber | - | 8.5 | 7.2 | 20.5 | 22.7 | 22.7 | 6.7 | 6.7 | 6.6 | 23.1 | 8.5 | 8.5 |
| Loss tangent tan δ of Heat-conducting rubber | - | 0.075 | 0.077 | 0.067 | 0.069 | 0.07 | 0.061 | 0.062 | 0.059 | 0.06 | 0.075 | 0.075 |
| Length H3 (mm) of Side-reinforcing-rubber-layer projection-region | 52 | 52 | 52 | 52 | 52 | 52 | 52 | 52 | 52 | 52 | 52 | 52 |
| Length H4 (mm) of Heat-conducting member in Side-reinforcing-rubber-layer projection-region | 52 | 52 | 52 | 52 | 52 | 52 | 52 | 52 | 52 | 52 | 52 | 52 |
| Ratio(H4/H3)(%) | 100 | 100 | 100 | 100 | 100 | 100 | 100 | 100 | 100 | 100 | 100 | 100 |
| Thickness W2 (mm) of Metallic sheet | 0.09 | - | - | - | - | - | - | - | - | - | - | - |
| Presence of Slack | None | - | - | - | - | - | - | - | - | - | - | - |
| Maximum thickness rt (mm) of Side-reinforcing rubber layer | 5 | 10 | 10 | 10 | 10 | 10 | 10 | 10 | 10 | 10 | 10 | 10 |
| Presence of Dimple | None | None | None | None | None | None | None | None | None | None | None | None |
| Diameter D2 (mm) of Dimple | - | - | - | - | - | - | - | - | - | - | - | - |
| Depth (e) (mm) of Dimple | - | - | - | - | - | - | - | - | - | - | - | - |
| Diameter d2 (mm) of Sole surface of Dimple | - | - | - | - | - | - | - | - | - | - | - | - |
| Ratio (d2/D2) | - | - | - | - | - | - | - | - | - | - | - | - |
| Runflat durability (index) [Larger is better.] | 191 | 236 | 221 | 226 | 246 | 220 | 230 | 233 | 230 | 231 | 211 | 240 |
| Mass of Tire (ndex) [Larger is better.] | 110 | 94 | 94 | 94 | 94 | 94 | 94 | 94 | 94 | 94 | 96 | 93 |
| Longitudinal spring constant (index) [Smaller is better.] | 97 | 102 | 102 | 103 | 103 | 103 | 102 | 102 | 102 | 103 | 101 | 103 |

| | | | | | | | | | | | | |
|---|---|---|---|---|---|---|---|---|---|---|---|---|
| *1 A: Heat-conducting rubber B: Metallic sheet | | | | | | | | | | | | |

**[Table 1-3]**

| | Ex. 17 | Ex. 18 | Ex. 19 | Ex. 20 | Ex. 21 | Ex. 22 | Ex. 23 | Ex. 24 |
|---|---|---|---|---|---|---|---|---|
| Cross-sectional view of Sidewall portion | Fig. 8 | Fig. 8 | Fig. 10 | Fig. 10 | Fig. 10 | Fig. 14 | Fig 9 | Fig. 9 |
| Liquid of Cooling device | Gas | Gas | Gas | Gas | Gas | Gas | Gas | Liquid |
| Heat-conducting member(*1) | A | A | B | B | B | B | A | A |
| Coefficient of thermal conductivity (W/·mK) of Heat-conducting member | 0.905 | 0.905 | 250 | 250 | 250 | 250 | 0.905 | 0.905 |
| Compound of Heat-conducting rubber | Compound 2 | Compound 2 | - | - | - | - | Compound 2 | Compound 2 |
| Thickness W1 (mm) of Heat-conducting rubber | 1.0 | 1.0 | - | - | - | - | 1.0 | 1.0 |
| Complex Modulus E* (Mpa) of Heat-conducting rubber | 8.5 | 8.5 | - | - | - | - | 8.5 | 8.5 |
| Loss tangent tan δ of Heat-conducting rubber | 0.075 | 0.075 | - | - | - | - | 0.075 | 0.075 |
| Length H3 (mm) of Side-reinforcing-rubber-layer projection-region | 52 | 52 | 52 | 52 | 52 | 52 | 52 | 52 |
| Length H4 (mm) of Heat-conducting member in Side-reinforcing-rubber-layer projection-region | 15 | 20 | 52 | 52 | 52 | 20 | 52 | 52 |
| Ratio (H4/H3) (%) | 29 | 38 | 100 | 100 | 100 | 38 | 100 | 100 |
| Thickness W2 (mm) of Metallic sheet | - | - | 0.06 | 0.12 | 0.09 | 0.09 | - | - |
| Presence of Slack | - | - | None | None | None | None | - | - |
| Maximum thickness rt (mm) of Side-reinforcing rubber layer | 10 | 10 | 10 | 10 | 10 | 10 | 10 | 10 |
| Presence of Dimple | None | None | None | None | None | None | Presence | Presence |
| Diameter D2 (mm) of Dimple | - | - | - | - | - | - | 8 | 8 |
| Depth (e) (mm) of Dimple | - | - | - | - | - | - | 1 | 1 |
| Diameter d2 (mm) of Sole surface of Dimple | - | - | - | - | - | - | 5 | 5 |
| Ratio (d2/D2) | - | - | - | - | - | - | 0.63 | 0.63 |
| Runftat durability (index) [Larger is better.] | 186 | 190 | 288 | 299 | 318 | 285 | 278 | 302 |
| Mass of Tire (index) [Larger is better.] | 98 | 98 | 100 | 100 | 101 | 100 | 95 | 95 |
| Longitudinal spring constant (index) [Smaller is better.] | 101 | 101 | 100 | 100 | 100 | 100 | 101 | 101 |

| | | | | | | | | |
|---|---|---|---|---|---|---|---|---|
| *1 A: Heat-conducting rubber B: Metallic sheet | | | | | | | | |

**[Table 2]**

| | Compound 1 | Compound 2 | Compound 3 | Compound 4 | Compound 5 | Compound 6 | Compound 7 | Compound 8 | Compound 9 | Compound 10 |
|---|---|---|---|---|---|---|---|---|---|---|
| NR | 30 | 30 | 30 | 50 | 50 | 50 | - | 15 | 30 | 30 |
| SBR | 70 | 70 | 70 | 20 | 20 | 20 | 70 | 70 | - | - |
| BR | - | - | - | 30 | 30 | 30 | - | - | - | - |
| IR | - | - | - | - | - | - | 30 | 15 | - | - |
| Modified SBR | - | - | - | - | - | - | - | - | 70 | - |
| Modified BR | - | - | - | - | - | - | - | - | - | 70 |
| Carbon black | 40 | 40 | 40 | 20 | 20 | 20 | 40 | 40 | 40 | 40 |
| Silica | 20 | 20 | 20 | 5 | 5 | 5 | 20 | 20 | 20 | 20 |
| Coal pitch-based carbon fibers | - | 10 | - | 10 | 20 | - | 10 | 10 | 10 | 10 |
| PAN series carbon fiber | - | - | 10 | - | - | 20 | - | - | - | - |
| Antioxidant 6C | 1.5 | 1.5 | 1.5 | 1.5 | 1.5 | 1.5 | 1.5 | 1.5 | 1.5 | 1.5 |
| Zing oxide | 3 | 3 | 3 | 3 | 3 | 3 | 3 | 3 | 3 | 3 |
| Stearic acid | 1 | 1 | 1 | 1 | 1 | 1 | 1 | 1 | 1 | 1 |
| Antioxidant FR | 1 | 1 | 1 | 1 | 1 | 1 | 1 | 1 | 1 | 1 |
| Sulfur | 5 | 5 | 5 | 5 | 5 | 5 | 5 | 5 | 5 | 5 |
| Vulcanization accelerator | 2 | 2 | 2 | 2 | 2 | 2 | 2 | 2 | 2 | 2 |
| Vulcanization booster agent | 2 | 2 | 2 | 2 | 2 | 2 | 2 | 2 | 2 | 2 |
| Content percentage (%) of NR and/or IR in Diene rubber 100 mass percent | 30 | 30 | 30 | 50 | 50 | 50 | 30 | 30 | 30 | 30 |

For the test result, it was confirmed that the run flat durability of the run flat tires in Examples was greatly improved without increasing excessively the longitudinal spring constant of the run flat tire.

## Claims

1. A vehicle (1) with a run flat tire (3) comprising: a wheel rim (4) and said run flat tire (3) including
a carcass (16) extending from a tread portion (12) through a sidewall portion (13) to a bead core (15) of a bead portion (14),
a side reinforcing rubber layer (19) having a substantially crescent cross-sectional shape and disposed in an inside of the carcass (16) of the sidewall portion (13) and
a heat-conducting member (21) having coefficient of thermal conductivity of not less than 0.3 w/(mK) provided on a tire cavity surface (22), wherein said heat-conducting member (21) extends, from a region (T) where said side reinforcing rubber layer (19) is projected on the tire cavity surface (22) at least to the bead bottom of said bead portion (14) so as to contact the rim part of the wheel rim (4) directly when the ti re is mounted on the wheel rim (4); and
a cooling device (8) to cool said run flat tire (3) by blasting fluid (G) toward said run flat tire (3) and/or a wheel rim (4) on which said run flat tire (3) is mounted.

2. The vehicle (1) as set forth in claim 1, wherein
at least part of said heat-conducting member (21) is disposed in a region where said side reinforcing rubber layer (19) is projected on the tire cavity surface (22).

3. The vehicle (1) as set forth in claim 1, wherein
said heat-conducting member (21) extends through said bead bottom to an axial outer surface of said bead portion (14).

4. The vehicle (1) as set forth in any one of claims 1 to 3, wherein
said heat-conducting member (21) is disposed entirely in the tire cavity surface (22).

5. The vehicle (1) as set forth in any one of claims 1 to 4, wherein
said heat-conducting member (21) is a heat-conducting rubber.

6. The vehicle (1) as set forth in claim 5, wherein
said heat-conducting rubber comprises base rubber including diene rubber and a coal pitch-based carbon fiber.

7. The vehicle (1) as set forth in claim 6, wherein a content percentage of natural rubber and/or isoprene rubber with respect to said diene rubber of 100 percent by mass in said heat-conducting rubber is in a range of from 20 to 80 percent by mass.

8. The vehicle (1) as set forth in claims 6 or 7, wherein
mixing amount of the coal pi tch-based carbon fi ber in sai d base rubber of 100 parts by mass with respect to said heat-conducting rubber is in a range of from 1 to 50 parts by mass.

9. The vehicle (1) as set forth in claims 5 to 8, wherein
the maximum thickness of said heat-conducting rubber is in a range of from 0.3 to 3.0 mm.

10. The vehicle (1) as set forth in claims 1 to 4, wherein
said heat-conducting member (21) is a metallic sheet.

11. The vehicle (1) as set forth in claim 10, wherein
the thickness of said metallic sheet is in a range of from 0.02 to 0.2 mm.

12. The vehicle (1) as set forth in claim 1 to 11, wherein
said cooling device (8) blasts said fluid (G) when an air pressure of said run flat tire (3) drops to below a predetermined value.

13. The vehicle (1) as set forth in claims 1 to 11, wherein
said fluid (G) is a gas.

14. The vehicle (1) as set forth in claim 13, wherein
said cooling device (8) comprises a duct including one end and the other end,
said one end is an air intake port to intake the air, and
said other end is an outlet to blow said air toward said run flat tire.

15. The vehicle (1) as set forth in claim 14, wherein
said cooling device (8) additionally comprises
a changeover device to blast at least part of fluid (G) flowing in said duct toward said run flat tire (3) when the air pressure of said run flat tire (3) decreases; and
a control device to control this changeover device.

16. The vehicle (1) as set forth in claims 1 to 12, wherein said fluid (G) is a liquid.

17. The vehicle (1) as set forth in claim 16, wherein said cooling device (8) comprises
a tank storing said liquid;
a pump to pump the liquid from the tank;
a flow passage having one end being connected with said pump and the other end communi cati ng wi th a di scharge port faci ng to the pneumatic tire; and
a control device to control said pump.

## Patentansprüche

1. Fahrzeug (1) mit einem Notlaufreifen (3), umfassend:
eine Radfelge (4) und den Notlaufreifen (3), enthaltend
eine Karkasse (16), die sich von einem Laufflächenabschnitt (12) durch einen Seitenwandabschnitt (13) zu einem Wulstkern (15) eines Wulstabschnitts (14) erstreckt,
eine Seitenverstärkung-Kautschukschicht (19), die eine im Wesentlichen sichelförmige Querschnittsform aufweist und in einer Innenseite der Karkasse (16) des Seitenwandabschnitts (13) angeordnet ist, und
ein wärmeleitendes Element (21), das eine Wärmeleitzahl von nicht weniger als 0,3 W/(mK) aufweist und an einer Reifenhohlraumoberfläche (22) vorgesehen ist, wobei das wärmeleitende Element (21) sich von einem Bereich (T), von welchem die Seitenverstärkungs-Kautschukschicht (19) an der Reifenhohlraum-Oberfläche (22) vorsteht, zumindest bis zu der Wulstunterseite des Wulstabschnitts (14) erstreckt, so dass es mit dem Felgenteil der Radfelge (4) direkt in Kontakt steht, wenn der Reifen auf die Radfelge (4) aufgezogen ist; und
eine Kühleinrichtung (8), um den Notlaufreifen (3) zu kühlen, indem Fluid (G) in Richtung des Notlaufreifens (3) und/oder einer Radfelge (4), auf die der Notlaufreifen (3) aufgezogen ist, gestrahlt wird.

2. Fahrzeug (1) nach Anspruch 1, wobei zumindest ein Teil des wärmeleitenden Elements (21) in einem Bereich angeordnet ist, in welchem die Seitenverstärkungs-Kautschukschicht (19) an der Reifenhohlraum-Oberfläche (22) vorsteht.

3. Fahrzeug (1) nach Anspruch 1, wobei das wärmeleitende Element (21) sich durch die Wulstunterseite hindurch zu einer axial äußeren Oberfläche des Wulstabschnitts (14) erstreckt.

4. Fahrzeug (1) nach einem der Ansprüche 1 bis 3, wobei das wärmeleitende Element (21) vollständig in der Reifenhohlraum-Oberfläche (22) angeordnet ist.

5. Fahrzeug (1) nach einem der Ansprüche 1 bis 4, wobei das wärmeleitende Element (21) ein wärmeleitender Kautschuk ist.

6. Fahrzeug (1) nach Anspruch 5, wobei der wärmeleitende Kautschuk Basiskautschuk umfasst, der Dienkautschuk und auf Teerpech basierende Kohlefaser enthält.

7. Fahrzeug (1) nach Anspruch 6, wobei ein prozentualer Gehalt von Naturkautschuk und/oder Isoprenkautschuk mit Bezug auf den Dienkautschuk von 100 Masseprozent in dem wärmeleitenden Kautschuk in einem Bereich von 20 bis 80 Masseprozent liegt.

8. Fahrzeug (1) nach Ansprüchen 6 oder 7, wobei die Mischungsmenge der auf Kohlepech beruhenden Kohlefaser in dem Basiskautschuk von 100 Masseteilen mit Bezug auf den wärmeleitenden Kautschuk in einem Bereich von 1 bis 50 Masseteilen liegt.

9. Fahrzeug (1) nach den Ansprüchen 5 bis 8, wobei die maximale Dicke des wärmeleitenden Kautschuks in einem Bereich von 0,3 bis 3,0 mm liegt.

10. Fahrzeug (1) nach den Ansprüchen 1 bis 4, wobei das wärmeleitende Element (21) Blech ist.

11. Fahrzeug (1) nach Anspruch 10, wobei die Dicke des Blechs in einem Bereich von 0,02 bis 0,2 mm liegt.

12. Fahrzeug (1) nach Anspruch 1 bis 11, wobei die Kühleinrichtung (8) das Fluid (G) strahlt, wenn ein Luftdruck des Notlaufreifens (3) unter einen vorbestimmten Wert fällt.

13. Fahrzeug (1) nach den Ansprüchen 1 bis 11, wobei das Fluid (G) ein Gas ist.

14. Fahrzeug (1) nach Anspruch 13, wobei
die Kühleinrichtung (8) einen Kanal umfasst, der ein Ende und das andere Ende enthält,
das eine Ende ein Lufteinlassanschluss zum Einlassen der Luft ist, und
das andere Ende ein Auslass ist, um die Luft in Richtung des Notlaufreifens zu blasen.

15. Fahrzeug (1) nach Anspruch 14, wobei die Kühleinrichtung (8) zusätzlich umfasst
eine Wechseleinrichtung, um zumindest einen Teil des Fluids (G), das in dem Kanal strömt, in Richtung des Notlaufreifens (3) zu strahlen, wenn der Luftdruck des Notlaufreifens (3) abnimmt; und
eine Steuereinrichtung, um diese Wechseleinrichtung zu steuern.

16. Fahrzeug (1) nach den Ansprüchen 1 bis 12, wobei das Fluid (G) eine Flüssigkeit ist.

17. Fahrzeug (1) nach Anspruch 6, wobei die Kühleinrichtung (8) umfasst
einen Tank, der die Flüssigkeit speichert;
eine Pumpe, um die Flüssigkeit aus dem Tank zu pumpen;
einen Strömungsdurchgang, dessen eines Ende mit der Pumpe verbunden ist und dessen anderes Ende mit einem Austragsanschluss, der dem Luftreifen zugewandt ist, kommuniziert; und
eine Steuereinrichtung, um die Pumpe zu steuern.

## Revendications

1. Véhicule (1) avec un pneumatique pour roulage à plat (3) comprenant :
une jante de roue (4) et ledit pneumatique pour roulage à plat (3) qui inclut
une carcasse (16) s'étendant depuis une portion formant bande de roulement (12) via une portion formant paroi latérale (13) jusqu'à une âme de talon (15) d'une portion formant talon (14),
une couche de caoutchouc de renfort latéral (19) ayant une forme de section transversale sensiblement en croissant et disposée à l'intérieur de la carcasse (16) de la portion formant paroi latérale (13), et
un élément thermoconducteur (21) ayant un coefficient de conductivité thermique qui n'est pas inférieure à 0,3 W/(m·K) prévu sur une surface (22) de cavité du pneumatique, dans lequel ledit élément thermoconducteur (22) s'étend depuis une région (T) dans laquelle ladite couche de caoutchouc de renfort latéral (19) se projette sur la surface (22) de cavité du pneumatique au moins jusqu'au fond du talon de ladite portion formant talon (14) de manière à venir directement en contact avec la partie de jante de la jante de roue (4) quand le pneumatique est monté sur la jante de roue (4) ; et
un dispositif de refroidissement (8) pour refroidir ledit pneumatique pour roulage à plat (3) en projetant un fluide (G) vers ledit pneumatique pour roulage à plat (3) et/ou sur une jante de roue (4) sur laquelle ledit pneumatique pour roulage à plat (3) est monté.

2. Véhicule (1) selon la revendication 1, dans lequel au moins une partie dudit élément thermoconducteur (21) est disposée dans une région dans laquelle ladite couche de caoutchouc de renfort latéral (19) se projette sur la surface (22) de cavité du pneumatique.

3. Véhicule (1) selon la revendication 1, dans lequel ledit élément thermoconducteur (21) s'étend à travers ledit fond de talon jusqu'à une surface axialement extérieure de ladite portion formant talon (14).

4. Véhicule (1) selon l'une quelconque des revendications 1 à 3, dans lequel
ledit élément thermoconducteur (21) est disposé entièrement dans la surface (22) de cavité du pneumatique.

5. Véhicule (1) selon l'une quelconque des revendications 1 à 4, dans lequel
ledit élément thermoconducteur (21) est un caoutchouc thermoconducteur.

6. Véhicule (1) selon la revendication 5, dans lequel
ledit caoutchouc thermoconducteur comprend un caoutchouc de base qui inclut du caoutchouc diène et des fibres de carbone à base de poix de houille.

7. Véhicule (1) selon la revendication 6, dans lequel
un pourcentage de caoutchouc naturel et/ou de caoutchouc isoprène contenu par rapport audit caoutchouc diène de 100 % en masse dans ledit caoutchouc thermoconducteur est dans une plage de 20 à 80 % en masse.

8. Véhicule (1) selon la revendication 6 7, dans lequel
la quantité de fibres de carbone à base de poix de houille mélangées dans ledit caoutchouc de base de 100 % en masse par rapport audit caoutchouc thermoconducteur est dans une plage de 1 à 50 % en masse.

9. Véhicule (1) selon les revendications 5 à 8, dans lequel
l'épaisseur maximum dudit caoutchouc thermoconducteur est dans une plage de 0,3 à 3,0 mm.

10. Véhicule (1) selon les revendications 1 à 4, dans lequel
ledit élément thermoconducteur (21) est une feuille métallique.

11. Véhicule (1) selon la revendication 10, dans lequel
l'épaisseur de ladite feuille métallique est dans une plage de 0,02 à 0,2 mm.

12. Véhicule (1) selon les revendications 1 à 11, dans lequel
ledit dispositif de refroidissement (8) projette ledit fluide (G) quand une pression d'air dudit pneumatique pour roulage à plat (3) chute au-dessous d'une valeur prédéterminée.

13. Véhicule (1) selon les revendications 1 à 11, dans lequel
ledit fluide (G) est un gaz.

14. Véhicule (1) selon la revendication 13, dans lequel
ledit dispositif de refroidissement (8) comprend un conduit incluant une première extrémité et une seconde extrémité,
ladite première extrémité est un orifice d'admission d'air pour l'admission d'air, et
ladite seconde extrémité est une sortie pour souffler ledit air vers ledit pneumatique pour roulage à plat.

15. Véhicule (1) selon la revendication 14, dans lequel
ledit dispositif de refroidissement (8) comprend additionnellement
un dispositif de commutation pour projeter au moins une partie du fluide (G) s'écoulant dans ledit conduit vers ledit pneumatique pour roulage à plat (3) quand la pression d'air dudit pneumatique pour roulage à plat (3) diminue ; et
un dispositif de commande pour commander ce dispositif de commutation.

16. Véhicule (1) selon les revendications 1 à 12, dans lequel ledit fluide (G) est un liquide.

17. Véhicule (1) selon la revendication 6, dans lequel ledit dispositif de refroidissement (8) comprend
un réservoir pour stocker ledit liquide ;
une pompe pour pomper le liquide depuis le réservoir ;
un passage d'écoulement ayant une extrémité connectée à ladite pompe et l'autre extrémité en communication avec un orifice de décharge en face du pneumatique ; et
un dispositif de commande pour commander ladite pompe.
